# EUROPEAN PATENT APPLICATION

(11) **EP 1 974 908 A2**
(43) Date of publication of application: **01.10.2008**
(21) Application number: 08005464.6
(22) Date of filing: 25.03.2008
(51) Int. Cl.: B32B 27/00

(54) **Decorative sheet, decorative molded body, decorative key sheet, and decorative sheet manucturing method**

(30) Priority: 30.03.2007 JP 2007095551
(71) Applicant: POLYMATECH CO., LTD., Tokyo (JP)
(72) Inventor: Kunthady, Tedi c/o R&D Center of Polymatech Co., Ltd, Tokyo (JP); Arai, Masami c/o R&D Center of Polymatech Co., Ltd, Tokyo (JP)
(74) Representative: Schmid, Wolfgang

(57) **Abstract**

To provide a decorative sheet having enhanced durability of an edge portion of a soft feel layer and is unlikely damaged, a manufacturing method for a decorative sheet, a decorative molded body, and a decorative key sheet, a decorative sheet A with a soft touch feeling has a foamed layer (2) having a side surface of an edge portion covered with a protective portion (5).

## Description

### BACKGROUND OF THE INVENTION

### 1. Field of the Invention

The present invention relates to a decorative sheet, which is used for covering portions of an article, where people may touch, for example, exteriors of various electronic equipment such as a personal digital assistant, OA equipment, AV equipment, and a household electrical appliance, interiors of automobiles, interior construction materials, stationery, and daily necessities, and is capable of imparting to the article a soft feeling when being touched (hereinafter, referred to as "soft touch feeling"), a decorative molded body, a decorative key sheet, and a decorative sheet manufacturing method.

### 2. Description of the Related Art

The exteriors of some articles, for example, various electronic equipment such as a personal digital assistant and a household electrical appliance, and the interiors of some automobiles are decorated with a soft material to provide a user with a soft touch feeling, thus adding a quality appearance to such articles for enhancement in design value and differentiation.

For example, JP 5-221271 A and JP 2000-158463 A each disclose a skin material imparting a soft touch feeling to automotive interior components. The skin material exhibits a laminate structure including an outer layer formed of a solid layer and an inner layer formed of a foamed layer, and is formed by powder slush molding.

Further, JP 5-84775 A, JP 5-98041 A, and JP 6-254885 A each disclose a technology for obtaining a molded product with a soft touch feeling through integration of a soft touch sheet and a molding resin. In this soft touch sheet, foaming beads, hollow beads, elastic particles, or the like are mixed in a resin, and the composition thus obtained is formed into a sheet through coating or drawing; further, a foamed resin layer is stacked thereon. Then, this soft touch sheet is inserted into a mold for injection molding to perform resin injection molding, thereby obtaining a molded product through integration of the soft touch sheet with a resin molded body. As compared with a case of later-attaching the soft touch sheet onto a surface of the resin molded body, the above manufacturing technique, in which integration is thus effected through insert molding, is more advantageous in that a working efficiency thereof is excellent and the manufacturing is easy,

Incidentally, when applying to a product the skin material as disclosed in JP 5-221271 A and JP 2000-158463 A described above, and the soft touch sheet as disclosed in JP 5-84775 A, JP 5-98041 A, and JP 6-254885 A, the skin material and the soft touch sheet, which are in the form of sheets, are cut and attached to the surface of the product main body. Then, a foamed layer or a foamed resin layer appears in the side surface of the edge portion of the cut skin material and of the soft touch sheet. The foamed layer and the foamed resin layer are each inferior in durability and chemical resistance. Accordingly, when used with the foamed layer or the foamed resin layer exposed, the edge portion will suffer damage, and there is a fear of the damage gradually expanding from the edge portion. For example, when applied to a mobile (cellular) phone, fingers or clothes of a user will be rubbed against the edge portion to scrape off the foamed layer or the foamed resin layer, and sweat, hand cream or the like will be allowed to adhere to the edge portion to erode the foamed layer or the foamed resin layer; in this way, the edge portion of the skin material and of the soft touch sheet will suffer damage, with the damaged portion gradually expanding.

### DISCLOSURE OF THE INVENTION

The present invention has been made in view of the above-mentioned problem in the prior-art. It is accordingly an object of the present invention to provide a decorative sheet which involves no exposure of the foamed layer in the decorative sheet, which is liable to occur after deformation or cutting of the decorative sheet, and which helps to enhance durability of an edge portion of the deformed or cut decorative sheet to make it resistant to damage, a method of manufacturing a decorative sheet, and a decorative molded body and a decorative key sheet using the decorative sheet.

In order to achieve the above-mentioned object, the present invention is constructed as follows. That is, the present invention provides a decorative sheet including a soft feel layer including a skin layer and a foamed layer stacked on a back surface of the skin layer on a side opposite to an external surface of the skin layer, in which a side surface at an edge portion of the foamed layer is provided with a protective portion covering the side surface.

According to the present invention, in the decorative sheet including a soft feel layer including a skin layer and a foamed layer, a protective portion covering the side surface of the edge portion of the foamed layer is provided. For example, when the decorative sheet is cut, there appears at an outer edge portion thereof a cut surface in which the skin layer and the foamed layer are stacked together. However, in the present invention, there is provided a protective portion covering the side surface of the foamed layer where this cut surface appears. Thus, no foamed layer is exposed in the cut surface of the decorative sheet, making it possible for the foamed layer to be unlikely damaged when in use. Thus, as compared with the conventional skin material in which the foamed layer, etc. are allowed to be exposed, it is possible to achieve an improvement in terms of durability.

In the decorative sheet of the present invention, the protective portion is formed by extending the skin layer up to the side surface at the edge portion of the foamed layer. That is, it is possible to cover the side surface of the foamed layer at the edge portion of the decorative sheet with the skin layer. This makes it possible to cover the foamed layer without using any other separate member as the protective portion, thereby achieving a reduction in the number of components and in production cost. Further, the protective portion is a part of the skin layer, so, as compared with a protective portion formed of some other separate member and formed solely at the side surface of the edge portion, it is possible to secure a large fixation area between the protective portion and the foamed layer, thereby being capable of making the protective portion to be hardly peeled from the foamed layer. Note that, it is preferred for the side surface of the edge portion of the foamed layer to be less than 90° with respect to the bottom surface of the soft feel layer. It is more preferred for the angle to be less than 80°. This owes that the skin layer covering the surface of the foamed layer then softens and expands to easily form the protective portion covering up to the side surface of the foamed layer.

In the decorative sheet of the present invention, the protective portion is formed by drawing the skin layer through heating and pressurization in a direction crossing the soft feel layer. The side surface of the edge portion of the foamed layer can be covered with the protective portion formed of the expanded skin layer. The expression "the direction crossing the soft feel layer" implies not only a direction perpendicular to the soft feel layer surface but also a direction crossing the surface direction of the soft feel layer.

Further, in the decorative sheet of the present invention, the protective portion may be formed as a coating layer formed at the side surface of the edge portion of the foamed layer. When the side surface of the foamed layer appearing in the cut surface is thus covered with the protective portion, no foamed layer is exposed in the cut surface of the decorative sheet, thereby being capable of making the foamed layer unlikely damage during use. Thus, as compared with the conventional skin material in which the foamed layer, etc. are allowed to be exposed, it is possible to achieve an enhancement in durability. Further, by providing a coating layer on the back side of the foamed layer and expanding this coating layer to form the protective portion, it is possible to secure a larger fixation area as compared with the protective portion formed of some other separate member and formed solely on the side surface of the edge portion, so it is possible to make the protective portion to be hardly peeled off.

In the decorative sheet of the present invention, there is further provided a through-hole passing through a thickness of the soft feel layer, in which the protective portion may be provided on the side surface of the foamed layer in the through-hole. Since the protective portion covering the foamed layer is also provided on the side surface of the through-hole passing through the thickness of the soft feel layer, the foamed layer is not exposed in the through-hole of the soft feel layer either, thus making the foamed layer unlikely damage during use. Thus, as compared with the conventional skin material in which the foamed layer, etc. are exposed, it is possible to achieve an improvement in terms of durability.

In the decorative sheet of the present invention, the external surface of the skin layer of the soft feel layer has a bottomed groove portion formed in the external surface, and the protective portion may be formed on the side surface of the foamed layer in the groove portion. That is, the protective portion covering the foamed layer is also provided on the side surface of the groove portion formed in the foamed layer. Thus, the foamed layer is not exposed on the side surface of the groove portion of the foamed layer either, thereby being capable of making the foamed layer unlikely damage during use. Thus, as compared with the conventional skin material in which the foamed layer, etc. are exposed, it is possible to achieve an improvement in terms of durability.

In the decorative sheet of the present invention, a shield layer may be provided on a back surface of the soft feel layer, for interfering conductance of heat and pressure to the soft feel layer. That is, heat and pressure applied from the back surface side of the soft feel layer are buffered by the shield layer and are not easily conducted to the soft feel layer, so it is possible to diminish the influence of the heat and pressure on the soft feel layer. For example, when the decorative sheet of the present invention is formed by insert molding with the soft feel layer held in contact with the mold surface, the molten resin injected into the mold impinges upon the shield layer stacked on the back surface side of the soft feel layer, and the shield layer receives the heat and pressure of the molten resin. The received heat and pressure are buffered by the shield layer to make it hard for them to be conducted to the soft feel layer, so it is possible to diminish the influence of the heat and pressure on the foamed layer constituting the back side of the soft feel layer. The foamed layer is subject to deformation in a heated state, so it is likely to be crushed when compressed while receiving heat, and, when, as in the case of the present invention, the influence of the heat and pressure on the foamed layer is small, the foamed layer can be made unlikely crushed, thereby being possible to restrain loss of the soft touch feeling.

In the decorative sheet of the present invention including the shield layer, it is possible for the shield layer to be formed of a rubber-like elastic material.. Thus, the shield layer exhibits a distortion phenomenon, making it possible to enhance the buffering effect with respect to the pressure received. Thus, it is possible to diminish the influence of the pressure on the foamed layer, making the foamed layer less subject to crushing. Thus, it is possible to suppress loss of the soft touch feeling.

In the decorative sheet of the present invention including the shield layer formed of a rubber-like elastic material, the rubber-like elastic material may be made of urethane. A urethane-type rubber-like elastic material exhibits high strength and high shock absorption property, so it can further enhance the buffering effect with respect to the pressure received. Thus, it is possible to diminish the influence of the pressure received by the foamed layer, making the foamed layer less subject to crushing. Consequently, it is possible to suppress loss of the soft touch feeling.

Further, the present invention provides a decorative molded body including such a decorative sheet. It is possible to provide a decorative molded body having a decorative sheet according to any one of the above aspects of the invention on the surface of a core material formed of a molded body.

In the decorative molded body of the present invention, the decorative sheet is provided on the surface of the core material, so it is possible to realize a decorative molded body having a soft touch feeling.

Further, according to the present invention, it is possible to provide a key sheet decorated by being provided with the above decorative sheet, that is, a decorative key sheet. A first decorative key sheet includes a base sheet formed of a resin film, a key top arranged on the base sheet, and a frame sheet formed of the decorative sheet and arranged side by side with the key top on the base sheet.

In the first decorative key sheet, the decorative sheet is used as a frame sheet, so it is possible to realize a decorative key sheet including a frame sheet having a soft touch feeling. In addition to the advantage like this, it is possible to realize a thin decorative key sheet including a base sheet formed of a resin film, a key top arranged on the base sheet, and a print adhesive layer formed as a print layer and formed of a cured body held in contact with the key top, the frame sheet, and the base sheet in a softened or melted state. Then, it is possible to provide a decorative key sheet having a print adhesive layer in which the fixation positions for the key top and the base sheet and the coating thickness are accurately controlled. That is, as compared, for example, with the conventional technique in which bonding is effected with adhesive dripped onto the bottom surface of the key top, it is possible to provide a thin key sheet in which there is less fluctuation in the position and area of the bonding layer and in which the key top is firmly fixed, and is not easily detached. In particular, owing to the provision of a frame-like decorative sheet between key tops, it is possible to realize a thin decorative key sheet in which a nail top is not easily allowed to enter the gap between the key top and the base sheet, and in which the key top is not easily detached.

As in the first decorative key sheet, in a second decorative key sheet, a decorative sheet is used as the frame sheet. The second decorative key sheet is a decorative key sheet which includes a base sheet formed of a resin film, and a frame sheet provided on the base sheet. The frame sheet is formed of a decorative sheet according to any one of the above aspects of the invention, thus providing a decorative key sheet whose surface has a key display.

In the second decorative key sheet, the frame sheet is formed of a decorative sheet, and, on the surface of the frame sheet, there is provided a decorative sheet decorated by providing a key top and a display hole for displaying a character, figure, or symbol to provide a key display, so it is possible to realize a decorative key sheet provided with a key top with a soft touch feeling.

A third decorative key sheet is a decorative key sheet including a base sheet formed of a rubber-like elastic material, and a key top arranged on the base sheet and having a decorative sheet according to any one of the above aspects of the invention on the operating surface of the key top main body formed of a resin.

In the third decorative key sheet, a decorative sheet is provided on the operating surface of the key top main body, so it is possible to realize a decorative key sheet provided with a key top with a soft touch feeling. In addition to the advantage like this, it is possible to effect decoration of different designs for different key tops, thus making it possible to realize a decorative key sheet of a novel design"

In addition, as a decorative key sheet, the present invention provides a decorative key sheet including the decorative key sheet according to any one of the above-mentioned aspects of the invention, in which the decorative key sheet is formed as an operation plate, and the operation plate has on a back surface on the side opposite to an operating surface thereof a pusher protruding in a depressing direction from the back surface.

In this decorative key sheet, a decorative sheet is used as the operation plate, so it is possible to realize a decorative key sheet provided with an operating surface with a soft touch feeling. In addition to the advantage like this, when, for example, there is provided on the back surface side of the decorative key sheet a circuit board with a belleville spring contact, the pusher protruding from the back surface can appropriately press the belleville spring contact, making it possible to realize a decorative key sheet allowing reliable depressing operation.

Further, it is possible to provide a decorative key sheet provided with a decorative sheet according to any one of the above aspects of the invention in which a division hole forming a depressing operation member is provided in an operation plate formed of the decorative sheet, and in which a base sheet stopping the division hole and formed of a resin film is provided on the back surface on the side opposite to the operating surface of the operation plate.

In this decorative key sheet, a decorative sheet is used as the operation plate, so it is possible to realize a decorative key sheet provided with a depressing operation member with a soft touch feeling. In addition to the advantage like this, it is possible to realize a thin decorative key sheet through a construction using an operation plate and a base sheet. By forming the division hole in an annular configuration, and providing a depressing operation member defined by the annular division hole, it is possible to realize a key sheet of a novel design. Further, in this case, the depression load of the depressing operation member situated in the groove of the division hole is smaller than the depression load that bends the operation plate (decorative sheet), so, as compared, for example, with the other depressing operation members surrounded three ways by the division hole, it allows a reduction in depression load.

Further, the present invention provides a method of manufacturing a decorative sheet including a soft feel layer including a skin layer and a foamed layer stacked on a back surface of the skin layer on a side opposite to an external surface of the skin layer, the method including: forming an edge portion on the foamed layer by a heating/pressing means applied from the skin layer side of the soft feel layer, and forming a protective portion for covering a side surface of the edge portion with the skin layer formed by softening and expanding.

In the method of manufacturing a decorative sheet provided with a soft feel layer including a skin layer and a foamed layer laminated on the back surface that is on the side opposite to the external surface of the skin layer, an edge portion is formed on the foamed layer by a device for heating and pressurizing from the skin layer side of the soft feel layer side, and the side surface of the edge portion is covered with the skin layer softened and expanded, whereby it is possible to produce a decorative sheet in which the foamed layer is not exposed to the exterior. Thus, as compared with the conventional skin material which allows the foamed layer to be exposed, it is possible to achieve an improvement in terms of durability.

In the method of manufacturing a decorative sheet, the heating/pressing means may be a cutter blade. Thus, the heated cutter from the skin layer side of the soft feel layer is pressed in a direction crossing the soft feel layer to thereby form an edge portion on the foamed layer, and the skin layer is softened and expanded along the cut surface of the foamed layer, thereby forming the protective portion covering the side surface of the edge portion of the foamed layer out of the skin layer. Thus, it is possible to cover the foamed layer without using any other separate member as the protective portion, making it possible to achieve a reduction in the number of components and in production cost. Further, the protective portion may be a part of the skin layer, so, as compared with the protective portion formed of a separate member formed solely on the side surface of the edge portion, the fixation area between the skin layer and the foamed layer can be made larger, thus allowing the protective portion to hardly peel from the foamed layer.

According to the decorative sheet, the decorative molded body, and the decorative key sheet of the present invention, no foamed layer is exposed on the cut surface, and the foamed layer can be made unlikely damage during actual use. Owing to this, as compared with the conventional skin material in which the foamed layer, etc. are allowed to be exposed, it is possible to achieve an enhancement in durability, making it possible to realize a decorative sheet, a decorative molded body, and a decorative key sheet that are unlikely damaged. Further, according to the decorative sheet manufacturing method of the present invention, it is possible to obtain a decorative sheet in which no foamed layer is exposed even in the case of a sheet having a through-hole extending therethrough in the thickness direction

The above description of the present invention should not be construed restrictively; the advantages, features, and uses of this invention will become more apparent from the following description given with reference to the accompanying drawings. Further, it is to be understood that all modifications not departing from the gist of this invention are to be covered by the scope of this invention.

### BRIEF DESCRIPTION OF THE DRAWINGS

In the accompanying drawings:

FIG. 1 is a sectional view of a decorative sheet A according to the present invention;

FIGS. 2(A) through 2(D) are sectional views of a decorative sheet B according to the present invention, in which part (A) is a sectional view of a first decorative sheet B, part (B) is a sectional view of a second decorative sheet B, part (C) is a sectional view of a third decorative sheet B, and part (D) is a sectional view of a fourth decorative sheet B;

FIG. 3 is a sectional view of a decorative sheet C according to the present invention;

FIGS. 4(A) through 4(D) are sectional views of a decorative sheet D according to the present invention, in which part (A) is a sectional view of a first decorative sheet D, part (B) is a sectional view of a second decorative sheet D, part (C) is a sectional view of a third decorative sheet D, and part (D) is a sectional view of a fourth decorative sheet D;

FIG 5 is a sectional view of a decorative sheet E according to the present invention;

FIG. 6 is a perspective view of a decorative molded body according to a first embodiment of the present invention;

FIG. 7 is a sectional view taken along the line VII-VII of FIG 6;

FIG 8 is a perspective view of a decorative molded body according to a second embodiment of the present invention;

FIG. 9 is a sectional view taken along the line IX-IX of FIG 8;

FIG 10 is a plan view of a decorative key sheet according to the first embodiment of the present invention;

FIG 11 is a sectional view taken along the line XI-XI of FIG 10;

FIG 12 is a plan view of a decorative sheet used for the decorative key sheet of FIG 10;

FIG. 13 is a sectional view taken along the line XIII-XIlI of FIG. 12;

FIG. 14 is a plan view of a decorative key sheet according to a second embodiment of the present invention;

FIG. 15 is a sectional view taken along the line XV-XV of FIG 14;

FIG. 16 is an enlarged partial perspective view of a decorative key sheet according to a third embodiment of the present invention;

FIG. 17 is a sectional view taken along the line XVII-XVII of FIG. 16;

FIG. 18 is a perspective view of a decorative sheet used for the decorative key sheet of FIG. 16;

FIG. 19 is a sectional view taken along the line XIX-XIX of FIG. 18;

FIG. 20 is a plan view of a decorative key sheet according to a fourth embodiment of the present invention;

FIG 21 is a sectional view taken along the line XXI-XXI of FIG. 20;

FIG. 22 is a plan view of a decorative key sheet according to a fifth embodiment of the present invention;

FIG. 23 is a sectional view taken along the line XXIII-XXIII of FIG. 22;

FIG 24 is a sectional view, corresponding to FIG 19, showing a modification of the decorative key sheet of the fifth embodiment;

FIG. 25 is a scanning electron microscope photograph showing a section of a decorative sheet according to an embodiment; and

FIG. 26 is a scanning electron microscope photograph showing a section of a conventional decorative sheet.

### DESCRIPTION OF THE PREFERRED EMBODIMENTS

In the following, embodiments of the present invention will be described with reference to the drawings. In the drawings, the reference numerals indicate portions and components. Regarding those members, materials, constructions, manufacturing methods, and effects which are common to the embodiments, a redundant description thereof will be omitted.

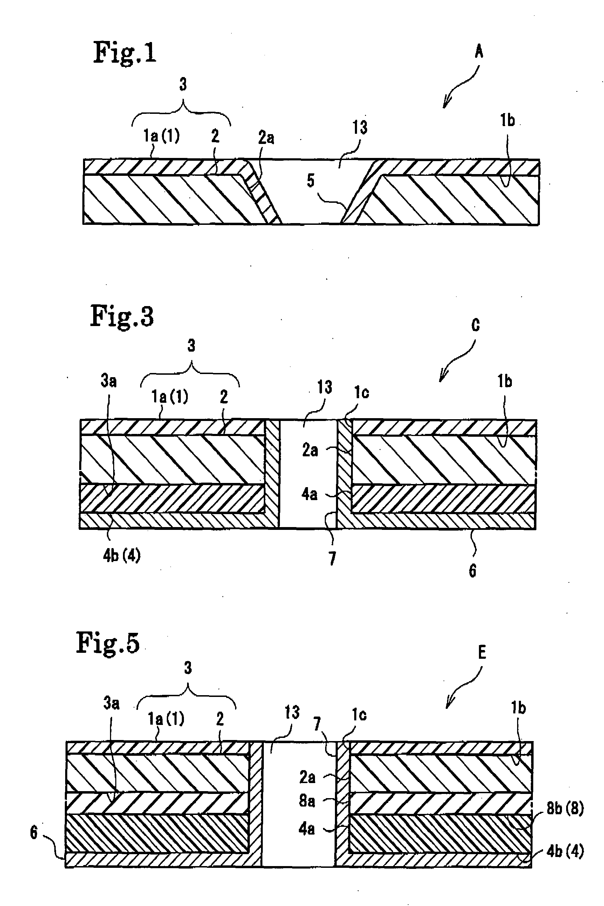

Embodiment of the decorative sheet (FIGS. 1 through 5). As an embodiment of the decorative sheet, decorative sheets A through E having sectional structures as shown in FIGS. 1 through 5 will be described.

Decorative sheet A: As shown in FIG. 1, in the decorative sheet A, a skin layer 1 and a foamed layer 2 are stacked together to form a soft feel layer 3.

The soft feel layer 3 has the function of imparting a soft touch feeling. In the above construction, the skin layer 1 is a solid layer constituting the surface of the soft feel layer 3; it is formed in a film-like configuration. On a back surface 1b on the side opposite to an external surface 1a of the skin layer 1, there is stacked the foamed layer 2, and the skin layer 1 protects the foamed layer 2.

The foamed layer 2 is a layer constituting the back surface side of the soft feel layer 3 and containing bubbles; it is formed as a porous resin layer Then, the edge portion of the foamed layer 2 is inclined so as to be gradually diverged as it extends away from the skin layer 1 side; the skin layer 1 extends along the side surface of the inclined edge portion, whereby side surface 2a of the foamed layer 2 is covered with a protective portion 5 formed by the skin layer 1. As shown in FIG. 1, regarding the construction of the edge portion of the decorative sheet A, there is provided a through-hole 13 extending through the soft feel layer 3, and a hole edge portion thereof is shown by way of example"

Here, the materials of the components of the decorative sheet A will be described. As the material of the skin layer 1, it is possible to use a resin or elastomer superior in wear resistance, waterproofness, and chemical resistance. Examples of the material include a polyolefin-based resin such as polyethylene or polypropylene, a polystyrene-based resin such as polystyrene or styrene/maleic-anhydride copolymer, a polyurethane-based resin, a polyvinyl chloride-based resin, and thermoplastic elastomer. Then, it is possible to use a resin composition obtained by mixing foaming beads, hollow beads, elastic beads, inorganic material, etc. in such a resin. By adding such beads and inorganic material, it is possible to impart an asperity feature and diversity in feel to the skin layer 1. The foaming beads are turned into hollow beads when heated; examples of the material thereof include polyurethane, acrylic-urethane copolymer, polystyrene, and styrene-isoprene copolymer. The hollow beads are hollow spherical bodies; examples of the material thereof include a copolymer of vinylidene chloride and acrylonitrile, and cross-linked acrylic. The elastic beads are resin particles which, when released after being pressurized to undergo a change in form, are elastically restored to the former form; examples of the material thereof include a polyurethane resin, an acryl-urethane resin, a polystyrene resin, and a styrene-isoprene copolymer. Examples of the inorganic material include silicon dioxide (SiO₂; also called silica or silicic anhydride), hydrated silicic acid (SiO₂ - xH₂O), and hydrated aluminum silicate (Al₂O₃9SiO₂-xH₂O). Further, various additives, for example, a coloring agent such as pigment or dye, antioxidant, and ultraviolet absorber, may be added to the above-mentioned resin composition as needed. It is also possible to transfer the asperity pattern to the external surface 1a of the skin layer 1 by using a mold releasing sheet, a mold or the like. The thickness of the skin layer 1 preferably ranges from 5 µm to 200 µm; when the thickness is less than 5 µm, the layer is liable to suffer damage to become incapable of protecting the foamed layer 2; when the thickness exceeds 200 µm, its rigidity is rather enhanced, and the layer feels hard to the touch for the user, making it difficult to realize a soft touch feeling.

The material of the foamed layer 2 is a resin or elastomer allowing foam molding; as in the case of the material of the skin layer 1, examples of the material include a polyolefin-based resin such as polyethylene or polypropylene, a polystyrene-based resin such as polystyrene or styrene/maleic-anhydride copolymer, a polyurethane-based resin, a polyvinyl chloride-based resin, and thermoplastic elastomer. The thickness of the foamed layer 2 preferably ranges from 100 µm to 1000 µm, and more preferably, from 200 µm to 500 µm. When the thickness is less than 100 µm, the layer is rather hard to the touch, thus making it difficult to realize a soft touch feeling; when the thickness exceeds 1000 µm, it becomes rather difficult to maintain the form due to the elasticity of the foamed layer, making it rather difficult to perform formation in three dimensional form.

A method of manufacturing the decorative sheet A will described The respective materials of the skin layer 1 and the foamed layer 2 are formed into a sheet-like configuration, and then stacked and fixed together for formation through laminating operation to thereby obtain a large-sized soft feel layer 3. When, at the time of lamination, the fixation between the layers is insufficient, stacking and fixation can be effected through the intermediation of a primer layer and an adhesive layer" Apart from this manufacturing method, it is also possible to integrate the two layers with each other and then form them into a sheet, and it is also possible to effect foaming after obtaining the sheet-like object. It is also possible to use a well-known method such as the slush molding method. Next, the large-sized soft feel layer 3 is cut to thereby obtain the decorative sheet A. In the cutting process, the cutter for the cutting is previously heated so that the skin layer 1 may be placed in a softened or melted state at the time of cutting (heating/pressurizing device), and cutting is effected by obliquely outward pressurization in a crossing direction with respect to the soft feel layer 3 from the skin layer 1 side, whereby the skin layer 1 is softened and expanded along the cutter while pressurizing and compressing the foamed layer 2, and the protective portion 5 covering the side surface 2a of the foamed layer 2 is formed while expanding the skin layer 1 at the edge portion of the foamed layer 2. In this way, the through-hole 13 passing through the thickness of the soft feel layer 3 is formed. The side surface of the through-hole 13 is covered with the protective portion 5 formed through drawing of the skin layer 1, thereby preventing the side surface of the edge portion of the foamed layer 2 from being exposed on the side surface of the through-hole 13. The decorative sheet A thus produced consists solely of the soft feel layer 3, and since no surplus layer exists, it is advantageously possible for the decorative sheet A to be formed as a thin layer.

The effects of the decorative sheet A will be described. In the decorative sheet A, no foamed layer 2 is exposed in the side surface of the edge portion of the decorative sheet A with a soft touch feeling, with the skin layer 1 extending, so it is possible to make the foamed layer 2 unlikely damage during actual use. Thus, as compared with the conventional skin material in which the foamed layer 2 etc, are exposed, it is possible to achieve an improvement in durability.

Since the protective portion 5 is formed of the skin layer 1, it is possible to cover the foamed layer 2 without newly using any other separate member as the protective portion 5, thus making it possible to achieve a reduction in the number of components and in production cost. Further, since the protective portion 5 is a part of the skin layer 1, as compared with the protective portion formed solely on the side surface of the edge portion using some other separate member, it is possible to secure a larger fixation area between the protective portion 5 and the foamed layer 2, thus allowing the protective portion 5 to be hardly peeled from the foamed layer 2

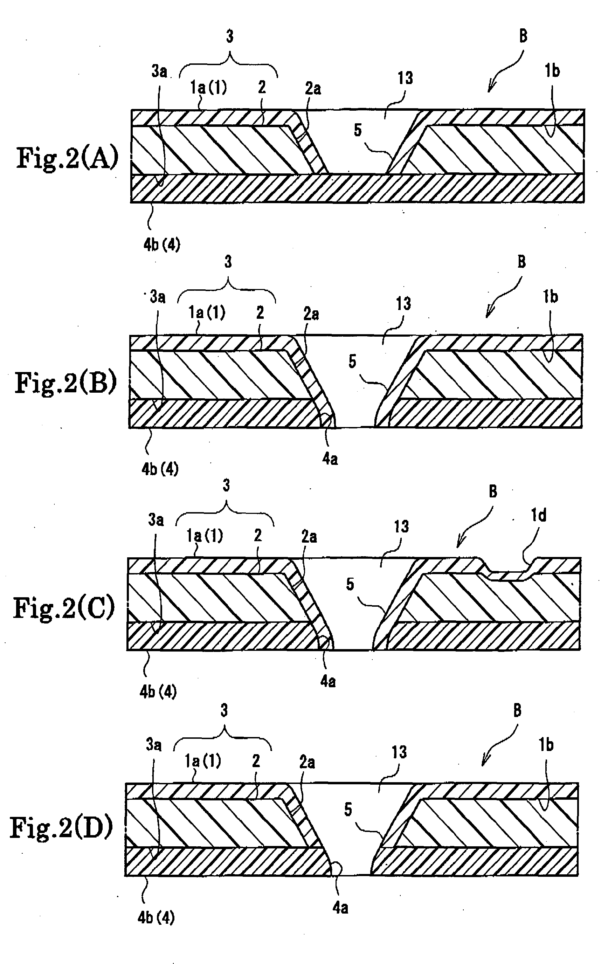

Decorative sheet B: As shown in FIGS 2(A) through 2(D), the decorative sheet B is provided with the soft feel layer 3 having the skin layer 1 and the foamed layer 2, and a base material sheet 4, with the base material sheet 4 being stacked on a back surface 3a of the soft feel layer 3. In other words, the base material sheet 4 is stacked on the back surface of the decorative sheet A.

While in a film-like form, the base material sheet 4 has the function of imparting a fixed form to the decorative sheet B.

Embodiments of the decorative sheet B will be described with reference to FIGS. 2(A) through 2(D). As shown in FIG. 2(A), it is possible for the through-hole 13 formed in the soft feel layer 3 to be closed by the base material sheet 4. As shown in FIG. 2(B), it is also possible to provide a through-hole 13 extending through the soft feel layer 3 and the base material sheet 4. As shown in FIG. 2(C), it is also possible to form in the surface of the skin layer 1 a bottomed groove portion 1d representing a figure, character, symbol or the like. As shown in FIG. 2(D), it is also possible to adopt a construction in which the protective portion 5 formed of the skin layer 1 does not cover up to the surface 4a of the base material sheet 4 but only covers up to the surface 2a of the foamed layer 2. The groove portion 1d shown in FIG. 2(C) can also be formed in the decorative sheet A described above.

Here, the material of the base material sheet 4 will be described. The base material sheet 4 is preferably formed of a hard resin; it is possible to adopt a resin whose bending elastic modulus according to JIS K7203 as defined based on ASTM-D883 is 7000 kg/cm² or more in a normal state. Specific examples of the material include thermoplastic resins such as polypropylene resin, polystyrene resin, polyethylene terephthalate resin, polybutylene terephthalate resin, polyethylene naphthalate resin, polystyrene naphthalate resin, acrylonitrile-styrene-acrylate resin, acrylonitrile-butadiene-styrene resin, polycarbonate resin, polyamide resin, polyimide resin, polyphenylene oxide resin, polyetheretherketone resin, polyphenylene sulfide resin, and polyphenylene ether resin, or a composite resin of these resins. It is also possible to add a filler such as metal or glass in the form of powder or fibers to the thermoplastic resin to thereby achieve an improvement in dimensional accuracy and heat resistance. The thickness of the base material sheet 4 preferably ranges from 100 µm to 500 µm. When the thickness is less than 100 µm, the strength is rather low, and there is a fear of damage being incurred at the time of integration with the core material resin through post-processing; further, the rigidity is rather low in this case, and it is difficult to maintain its configuration even by performing, for example, pre-molding into a three-dimensional configuration as a pre-processing of the insert molding. When the thickness exceeds 500 µm, the rigidity is rather high, and it is rather difficult to effect, for example, pre-molding into a three-dimensional configuration, thus making the insert molding rather difficult to perform.

A method of manufacturing the decorative sheet B will be described. As in the case of the decorative sheet A, the skin layer 1 and the foamed layer 2 are formed as sheets of the respective materials, and then these layers and the base material layer 4 are stacked and fixed together through laminating operation to obtain a large-sized decorative sheet. If, at the time of this stacking operation, the fixation between the layers is insufficient, it is possible to perform stacking and fixation through the intermediation of a primer layer and an adhesive layer. Further, it is also possible to previously produce the soft feel layer 3, and it is also possible to laminate the base material sheet 4 on the soft feel layer 3, so there is no need to stack all the layers at a time in the lamination process. Next, this large-sized decorative sheet is cut to thereby obtain the decorative sheet B. As in the case of the decorative sheet A, in the cutting process, the cutter for the cutting is previously heated so that the skin layer 1 may be placed in a softened or melted state at the time of cutting and cutting is effected obliquely outwards from the skin layer 1 side, whereby the skin layer 1 forms the protective portion 5 covering the side surface 2a of the foamed layer 2 and the side surface 4a of the base material sheet 4. The decorative sheet B thus produced consists solely of the soft feel layer 3 and the base material sheet 4, and since no surplus layer exists, it is advantageously possible for the decorative sheet B to be formed as a thin layer.

The effects of the decorative sheet B will be described. As in the case of the decorative sheet A, in the decorative sheet B, no foamed layer 2 is exposed in the side surface of the edge portion of the decorative sheet B with a soft touch feeling, with the skin layer 1 extending, so it is possible to make the foamed layer 2 unlikely damage during actual use. Thus, as compared with the conventional skin material in which the foamed layer 2 etc. are exposed, it is possible to achieve an improvement in durability. Since the protective portion 5 is formed by the skin layer 1, it is possible to cover the foamed layer 2 without newly using any other separate member as the protective portion 5, thus making it possible to achieve a reduction in the number of components and in production cost. Further, since the protective portion 5 is a part of the skin layer 1, as compared with the protective portion formed solely on the side surface of the edge portion using some other separate member, it is possible to secure a larger fixation area between the protective portion 5 and the foamed layer 2, allowing the protective portion 5 to be hardly peeled from the foamed layer 2.

In the decorative sheet B, in forming the groove portion 1 d as shown in FIG. 2(C), a heated jig or stamp is pressed against the skin layer 1 in the form of a figure, character or the like. At this time, the foamed layer 2 is compressed to generate the groove portion 1d; in the inner surface of the groove portion 1d inclusive of the side surface of the foamed layer 2 at the groove portion 1 d, there exists the skin layer 1 as the protective portion 5. While the groove portion 1 d is formed in the decorative sheet B, since the protective portion 5 formed of the skin layer 1 covers the foamed layer 2, it is possible to prevent damage of the foamed layer 2 starting from the groove portion 1d.

Further, as shown in FIG. 2(D), in the case of the decorative sheet B, it is also possible to obtain a decorative sheet B in which the protective portion 5 only covers up to the surface 2a of the foamed layer 2 as well as the decorative sheet in which the skin layer 1 covers up to the base material sheet 4.

Decorative sheet C: As shown in FIG 3, the decorative sheet C differs from the decorative sheet B in that the protective portion 5 is not formed by the skin layer 1 but by the back surface 4b of the base material sheet 4 and a coating layer 6 covering the side surface of the edge portion of the foamed layer 2. Otherwise, it is of the same construction as the decorative sheet B.

As in the case of the decorative sheet B, the soft feel layer 3 has the function of imparting a soft touch feeling, and, while in a film-like form, the base material sheet 4 has the function of imparting a fixed form to the decorative sheet C The side surfaces 1c, 2a, and 4a of the edge portions of the soft feel layer 3 and the base material sheet 4 are not inclined as in the case of the decorative sheet B but are covered by a protective portion 7 formed by the coating layer 6 stacked on the back surface 4b of the base material sheet 4. As shown in FIG 3, regarding the construction of the edge portion of the decorative sheet C, there is provided the through-hole 13 extending through the soft feel layer 3 and the base material sheet 4, and a hole edge portion thereof is shown by way of example.

Here, the material of the coating layer 6 will be described. The coating layer 6 is a cured layer formed of coating material, ink, liquid resin or the like; examples of the material include acrylic resin, urethane resin, vinyl chloride resin, ethyl acetate resin, and silicone resin.

A method of manufacturing the decorative sheet C will be described. As in the case of the decorative sheet B, the skin layer 1 and the foamed layer 2 are formed as sheets of the respective materials, and then these layers and the base material layer 4 are stacked and fixed together through laminating operation to obtain a large-sized decorative sheet. If, at this time, the fixation between the layers is insufficient, it is possible to perform stacking and fixation through the intermediation of a primer layer and an adhesive layer. Further, it is also possible to previously produce the soft feel layer 3, and it is also possible to laminate the base material sheet 4 on the soft feel layer 3, so there is no need to stack all the layers at a time in the lamination process. Next, this large-sized decorative sheet is cut, and a masking layer is provided on the external surface 1a of the skin layer 1. After this, coating material, ink or the like for forming the coating layer 6 is applied from the base material 4 side, and the coating layer 6 is fixed to the back surface 4b of the base material 4, the side surface 1c of the skin layer 1, the side surface 2a of the foamed layer 2, and the side surface 4a of the base material sheet 4 to thereby provide the protective portion 7. Finally, the masking layer is separated from the external surface 1 a of the skin layer 1 to thereby obtain the decorative sheet C.

The effects of the decorative sheet C will be described. In the decorative sheet C, the foamed layer 2 is not exposed in the side surface of the edge portion of the decorative sheet C with a soft touch feeling, and the foamed layer 2 can be made unlikely damage during actual use. Thus, as compared with the conventional skin material in which the foamed layer 2, etc. are exposed, it is possible to achieve an improvement in durability.

As in the case of the decorative sheet B, in the decorative sheet C, it is possible to form on the surface of the skin layer 1 a bottomed groove portion representing a figure, character, symbol or the like; further, it is possible to provide a protective portion 7 which covers up to the surface 2a of the foamed layer 2 but does not cover up to the back surface 4b of the base material sheet 4.

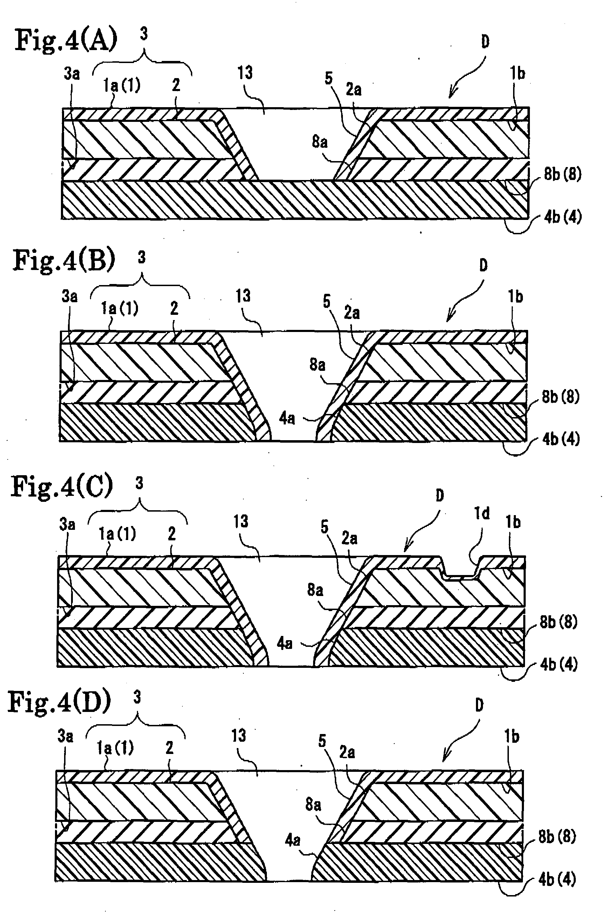

Decorative sheet D: As shown in FIGS. 4(A) through 4(D), the decorative sheet D differs from the decorative sheet B in that there is provided a shield layer (elastic layer) 8. Otherwise, it is of the same construction as the decorative sheet B.

The shield layer is a layer having the function of making it hard for the heat and pressure conducted to the base material sheet 4 to be conducted to the soft feel layer 3. Here, it is formed as the elastic layer 8, which is a solid layer formed of a rubber-like elastic material and held between the back surface 3a of the soft feel layer 3 and the base material sheet 4. As in the case of the decorative sheet B, in the decorative sheet D, the edge portion of the foamed layer 2 is inclined so as to be diverged from the skin layer 1 side toward the base material sheet 4; the side surface 2a of the foamed layer 2, the side surface 8a of the elastic layer 8, and the side surface 4a of the base material sheet 4 are covered with the protective portion 5 formed by extending the skin layer 1. As shown in FIG. 4(B), regarding the construction of the edge portion of the decorative sheet D, there is provided the through-hole 13 extending through the soft feel layer 3, the elastic layer 8, and the base material sheet 4, and a hole edge portion thereof is shown by way of example.

Here, the material of the elastic layer 8 will be described. As the material of the elastic layer 8, it is possible to use a rubber-like elastic material such as thermosetting rubber or thermoplastic elastomer; particularly suitable is a material having low heat conductivity, exhibiting high heat absorption property, buffering compression pressure, and absorbing compression pressure. As the thermosetting rubbers, there are exemplified natural rubber, silicone rubber, ethylene-propylene rubber, butadiene rubber, isoprene rubber, and urethane rubber As the thermoplastic elastomer, there are exemplified, styrene-based thermoplastic elastomer, olefine-based thermoplastic elastomer, ester-based thermoplastic elastomer, and urethane-based thermoplastic elastomer. Apart from the rubber-like elastic material, polyethylene, which is a semi-rigid resin, and styrene/butadiene block copolymer, which is endowed with both transparency and shock resistance, can be suitably used since they have low heat conductivity, exhibit high heat absorption property, and buffer and absorb compression pressure. Of these materials, particularly suitable is urethane rubber or urethane type thermoplastic elastomer, which has high tensile characteristics and high tear strength, which exhibits high compression pressure buffering property and shock absorption property, and which is superior in lamination workability. Further, taking into consideration the adhesion property and bonding property with respect to the foamed layer 2 and the base material 4, and the process for stacking together the foamed layer 2 and the base material sheet 4, urethane type thermoplastic elastomer is more preferable. The thickness of the elastic layer 8 is preferably 50 µm or more, and more preferably ranges from 150 µm to 500 µm. When the thickness of the shield layer is less than 50 µm, the buffer effect with respect to heat and pressure is rather low, and it is impossible to keep at low level the heat and pressure received by the foamed layer of the soft feel layer. Thus, the foamed layer is liable to be crushed, and there is a fear of the soft touch feeling being impaired. When the thickness is not less than 50 µm but less than 150 µm, it is possible to restrain conduction of heat and pressure to the soft feel layer, so the foamed layer is not easily crushed When the thickness is not less than 150 µm, the load when deforming the surface of the decorative sheet obtained is small, and it is possible to impart a satisfactory soft touch feeling for the operator. When the thickness exceeds 500 µm, it is possible to sufficiently restrain conduction of heat and pressure to the soft feel layer; however, the entire thickness of the decorative sheet becomes rather large; from the viewpoint of a reduction in thickness, a thickness of 500 µm or less is preferable

A method of manufacturing the decorative sheet D will be described. As in the case of the decorative sheet B, the skin layer 1, the foamed layer 2, and the elastic layer 8 are formed as sheets of the respective materials, and then these layers and the base material layer 4 are stacked and fixed together through laminating operation to obtain a large-sized decorative sheet. If, at this time, the fixation between the layers is insufficient, it is possible to perform stacking and fixation through the intermediation of a primer layer and an adhesive layer. Further, it is also possible to previously produce the soft feel layer 3, and it is also possible to laminate the elastic layer 8 and the base material sheet 4 on the soft feel layer 3, so there is no need to stack all the layers at a time in the lamination process. Next, this large-sized decorative sheet is cut to thereby obtain the decorative sheet D. As in the case of the decorative sheet A, in the cutting process, the cutter for the cutting is previously heated so that the skin layer 1 may be placed in a softened or molten state at the time of cutting, and cutting is effected obliquely outwards from the skin layer 1 side, whereby the skin layer 1 forms the protective portion 5 covering the side surface 2a of the foamed layer 2, the side surface 8a of the elastic layer 8, and the side surface 4a of the base material sheet 4.

The effects of the decorative sheet D will be described. As in the case of the decorative sheet B, in the decorative sheet D, no foamed layer 2 is exposed in the side surface of the edge portion of the decorative sheet D with a soft touch feeling, so it is possible to make the foamed layer 2 unlikely damage during actual use. Thus, as compared with the conventional skin material in which the foamed layer 2 etc. are exposed, it is possible to achieve an improvement in durability; since the protective portion 5 is formed by the skin layer 1, it is possible to cover the foamed layer 2 without newly using any other separate member as the protective portion 5, thus making it possible to achieve a reduction in the number of components and in production cost Further, since the protective portion 5 is a part of the skin layer 1, as compared with the protective portion formed solely on the side surface of the edge portion using some other separate member, it is possible to secure a larger fixation area between the protective portion 5 and the foamed layer 2, allowing the protective portion 5 to be peeled from the foamed layer 2.

Due to the provision of the elastic layer 8, which makes it hard for heat and pressure conducted from the base material sheet 4 side to the soft feel layer 3, it is possible to diminish the influence of heat and pressure applied from the back surface side to the soft feel layer 3 stacked on the external surface of the decorative sheet D. For example, when insert molding is performed, with the soft feel layer 3 of the decorative sheet D in contact with the mold surface, molten resin injected into the mold impinges upon the base material sheet 4, and the base material sheet 4 receives the heat and pressure of the molten resin. Since the heat and pressure received by the base material sheet 4 are buffered by the elastic layer 8, and are not easily conducted to the soft feel layer 3, it is possible to diminish the influence of the heat and pressure received by the foamed layer 2 constituting the back surface side of the soft feel layer 3. When the influence of the heat and pressure received by the foamed layer 2 is small, the foamed layer 2 is not easily crushed, making it possible to suppress the loss of the soft touch feeling.

As shown in FIG. 4(C), the decorative sheet D may have on its surface a bottomed groove portion 1d representing a figure, character, symbol or the like. In forming the groove portion 1 d, a heated jig or stamp is pressed against the skin layer 1 in the form of a figure, character or the like. At this time, the foamed layer 2 is compressed to generate the groove portion 1d; in the inner surface of the groove portion 1d inclusive of the side surface of the foamed layer 2 at the groove portion 1d, there exists the skin layer 1 as the protective portion 5. While the groove portion 1d is formed in the decorative sheet D, since the protective portion 5 formed of the skin layer 1 covers the foamed layer 2, it is possible to prevent damage of the foamed layer 2 starting from the groove portion 1d.

Further, as shown in FIG. 4(D), in the case of the decorative sheet D, it is possible to obtain a decorative sheet D in which the protective portion 5 formed of the skin layer 1 does not cover up to the surface 4a of the base material sheet 4 but only covers up to the surface 2a of the foamed layer 2. Such a decorative sheet D can be obtained in the same manner as the decorative sheet in which the skin layer 1 covers up to the base material sheet 4.

Decorative sheet E: As shown in FIG. 5, the decorative sheet E differs from the decorative sheet D in that the protective portion 7 is not formed by the skin layer 1 but by the coating layer 6 covering the back surface 4b of the base material sheet 4 and the side surface of the edge portion of the foamed layer 2. Otherwise, it is of the same construction as the decorative sheet D.

As in the case of the decorative sheet D, the soft feel layer 3 has the function of imparting a soft touch feeling, and, while in a film-like form, the base material sheet 4 has the function of imparting a fixed form to the decorative sheet E. The side surfaces 1c and 2a of the edge portion of the soft feel layer 3, the side surface 8a of the elastic layer 8 and the side surface 4a of the base material sheet 4 are not inclined as in the case of the decorative sheet C but is covered by the protective portion 7 formed by the coating layer 6 stacked on the back surface 4b of the base material sheet 4. As shown in FIG. 5, regarding the construction of the edge portion of the decorative sheet E, there is provided the through-hole 13 extending through the soft feel layer 3, the elastic layer 8, and the base material sheet 4, and a hole edge portion thereof is shown by way of example.

A method of manufacturing the decorative sheet E will be described. As in the case of the decorative sheet D, the skin layer 1, the foamed layer 2, and the elastic layer 8 are formed as sheets of the respective materials, and then these layers and the base material layer 4 are stacked and fixed together through laminating operation to obtain a large-sized decorative sheet. If, at this time, the fixation between the layers is insufficient, it is possible to perform stacking and fixation through the intermediation of a primer layer and an adhesive layer. Further, it is also possible to previously produce the soft feel layer 3, and it is also possible to laminate the base material sheet 4 on the soft feel layer 3, so there is no need to stack all the layers at a time in the lamination process. Next, this large-sized decorative sheet is cut, and a masking layer is provided on the external surface 1 a of the skin layer 1. After this, coating material, ink or the like for forming the coating layer 6 is applied from the base material 4 side, and the coating layer 6 is fixed to the back surface 4b of the base material 5, the side surface 1 c of the skin layer 1, the side surface 2a of the foamed layer 2, and the side surface 4a of the base material sheet 4 to thereby provide the protective portion 7. Finally, the masking layer is separated from the external surface 1 a of the skin layer 1 to thereby obtain the decorative sheet E.

The effects of the decorative sheet E will be described. In the decorative sheet E, the foamed layer 2 is not exposed in the side surface of the edge portion of the decorative sheet E with a soft touch feeling, and the foamed layer 2 can be made unlikely damage during actual use Thus, as compared with the conventional skin material in which the foamed layer 2, etc.. are exposed, it is possible to achieve an improvement in durability..

As in the decorative sheet D, in the decorative sheet E, it is possible to form on the surface of the skin layer 1 a bottomed groove portion representing a figure, character, symbol or the like; further, it is possible to provide a protective portion 7 which covers up to the surface 2a of the foamed layer 2 but does not cover up to the surface 4a of the base material sheet 4.

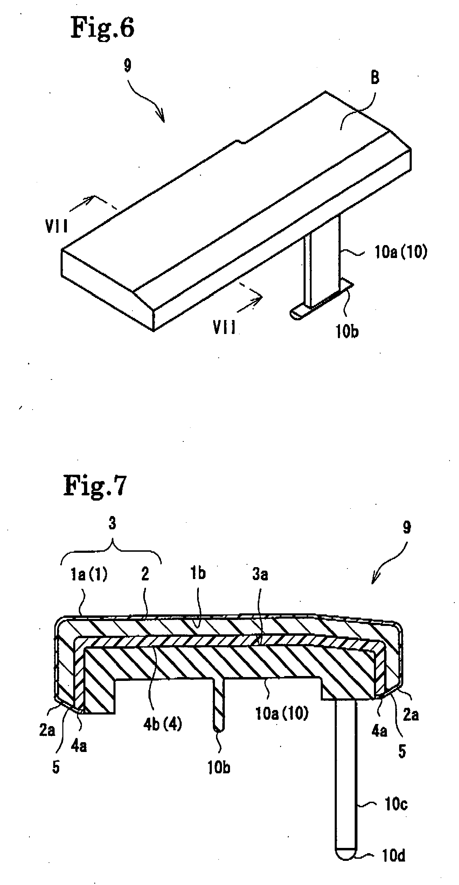

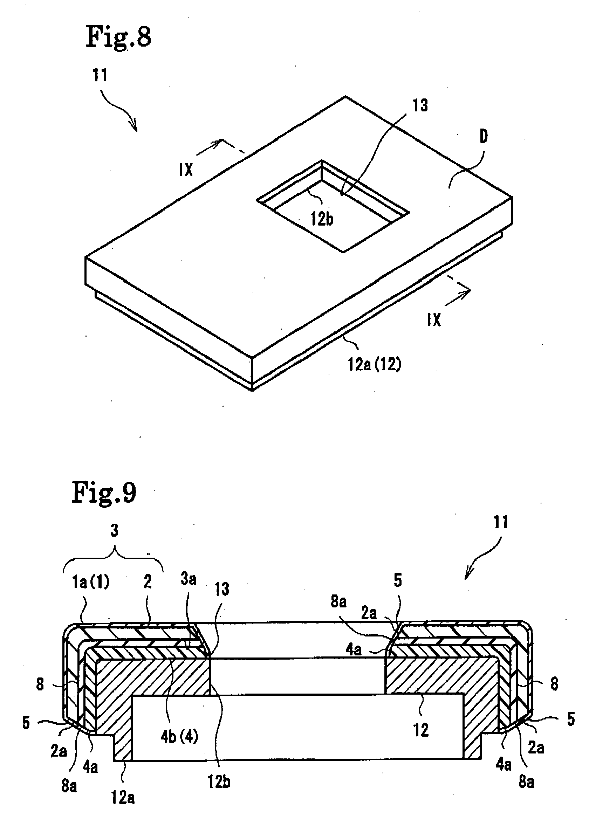

Embodiments of the decorative molded body (FIGS. 6 through 9); As embodiments of the decorative molded body, decorative molded bodies 9 and 10 shown in FIGS. 6 and 8 will be described.

First Embodiment (FIGS. 6 and 7). FIGS 6 and 7 show a decorative molded body 9 according to the first embodiment. The decorative molded body 9 is a cover member 9 attached to a mobile phone or the like and covering an external connection terminal; FIG. 6 is a perspective view of the cover member 9, and FIG. 7 is a sectional view of the cover member 9. The cover member 9 of the first embodiment is provided with the decorative sheet B and a cover main body 10 as the "core member".

As described above, the decorative sheet B is provided with the soft feel layer 3 having the skin layer 1 and the foamed layer 2 and the base material sheet 4, with the base material sheet 4 being stacked on the back surface 3a of the soft feel layer 3. Then, the inclined side surface 2a of the foamed layer 2 and the side surface 4a of the base material 4 are covered with the protective portion 5 formed of the skin layer 1. Then, the back surface 4b of the base material sheet 4 is fixed to the surface of the cover main body 10 described below,

The cover main body 10 is formed of thermoplastic elastomer, and is formed as a rectangular flat plate of a small thickness. In its back surface opposed to an external connection terminal (not shown), there is provided a recess 10a, and, substantially at the center of the recess 10a, there is provided an engagement protrusion 10b to be engaged with the external connection terminal. Further, a mounting protrusion 10c for mounting the cover member 9 to a casing (not shown) protrudes in the same direction as the engagement protrusion 10b, and, at the forward end of the mounting protrusion 10c, there is provided a detachment preventing portion 10d so that the cover member 9 may not be easily detached from the casing.

For the cover main body 10 serving as the core member, it is possible to use a material formed of a thermoplastic elastomer that can be firmly fixed to the base material sheet 4. Examples of the thermoplastic elastomer include olefin type thermoplastic elastomer, styrene type thermoplastic elastomer, ester type thermoplastic elastomer, and urethane type thermoplastic elastomer.

A method of manufacturing the cover member 9 will be described. First, by using a mold or a jig, pre-forming is performed on the decorative sheet B so that it may assume the same configuration as the surface of the cover main body 10. Next, insertion is effected such that the skin layer 1 of the decorative sheet B comes into contact with the cavity surface of the mold for the cover main body 10, and the mold is closed. After this, thermoplastic elastomer is injected into the cavity for forming the cover main body 10 to form the mold the cover main body 10, At this time, the molten resin impinges upon the base material sheet 4 of the decorative sheet B and is fixed thereto. Finally, the mold is opened, and the cover member 9 formed by integrally molding the decorative sheet B and the cover main body 10 can be obtained as the decorative molded body 9.

The effect of the cover member 9 will be described In the cover member 9, the decorative sheet B is provided on the cover main body 10, so it is possible to maintain a soft touch feeling, making it possible to realize the cover member 9 of high durability.

Second Embodiment (FIGS. 8 and 9). FIG 8 and 9 show a decorative molded body 11 according to the second embodiment of the present invention. The decorative molded body 11 is a casing 11 for a mobile phone or the like; FIG. 8 is a perspective view of the casing 11, and FIG. 9 is a sectional view of the casing 11. The casing 11 of the second embodiment of the present invention is provided with a decorative sheet D and a resin molded body 12 serving as the "core member".

As described above, the decorative sheet D is provided with the soft feel layer 3 having the skin layer 1 and the foamed layer 2, the elastic layer 8, and the base material sheet 4; the elastic layer 8 is stacked on the back surface 3a of the soft feel layer 3, and the base material sheet 4 is stacked on the back surface 8b of the elastic layer 8. in the decorative sheet D, there is formed a through-hole 13 rectangular in plan view passing through the thickness of the soft feel layer 3, the elastic layer 8, and the base material sheet 4. In the side surface of the outer edge of the decorative sheet D and in the side surface of the through-hole 13, the side surface 2a of the inclined foamed layer 2, the side surface 8a of the elastic layer 8, and the side surface 4a of the base material sheet 4 are covered with the protective portion 5 formed of the skin layer 1. Then, the decorative sheet is firmly fixed to the surface of the resin molded body 12 described below.

The resin molded body 12 is formed a thermoplastic resin, and is formed as a shallow container. At the edge of the resin molded body 12, there is provided an annular protrusion 12a to be engaged with a resin molded body (not shown); at the bottom thereof, there is provided a through-hole 12b forming a through-hole together with the through-hole 13 of the decorative sheet D.

For the resin molded body 12 serving as the core member, it is possible to use a material formed of a thermoplastic resin that can be firmly fixed to the base material sheet 4. Examples thereof, for example, include a polyethylene resin, a polypropylene resin, a polystyrene resin, a polyethylene-terephthalate resin, a polybutylene-terephthalate resin, an acrylonitrile-styrene-acrylate resin, an acrylonitrile butadiene styrene resin, a polymethyl methacrylate resin, a polymethacrylate resin, a polycarbonate resin, a polyamide resin, a polyphenylene oxide resin, a polyether ether ketone resin, a polyphenylene sulfide resin, and a polyphenylene ether resin.

A method of manufacturing the casing 11 will be described. First, the through-hole 13 is provided in the decorative sheet D by stamping, and then pre-forming is performed on the decorative sheet D by using a mold or a jig such that the decorative sheet D assumes the same surface configuration as the resin molded body 12. Next, insertion is effected such that the skin layer 1 of the decorative sheet D comes into contact with the cavity surface of the mold for the resin molded body 12, and the mold is closed. After this, thermoplastic resin is injected into the cavity for forming the resin molded body 12 to form the resin molded body 12. At this time, the molten resin impinges upon the base material sheet 4 of the decorative sheet D and is fixed thereto. Finally, the mold is opened, and the casing 11 formed by integrally molding the decorative sheet D and the resin molded body 12 can be obtained as the decorative molded body 11.

The effect of the casing 11 will be described. As in the cover member 9 of the first embodiment of the present invention, in the casing 11, the decorative sheet D is provided on the resin molded body 12, so it is possible to realize a casing 11 capable of maintaining a soft touch feeling.

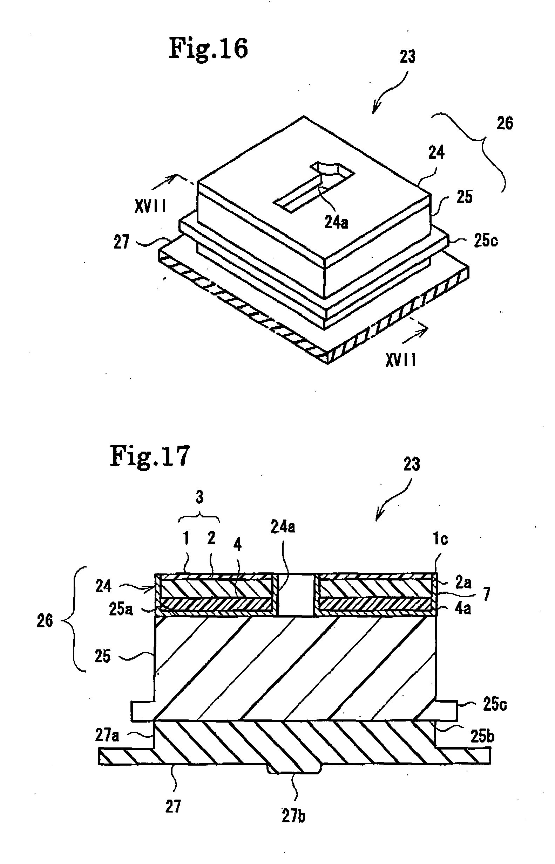

Third Embodiment: FIGS. 16 and 17 show a decorative molded body 26 according to the third embodiment of the present invention. The decorative molded body 26 is a key top 26 of a decorative key sheet 23; FIG. 16 is a perspective view of the key top 26, and FIG. 17 is a sectional view of the key top 26. The key top 26 of the third embodiment of the present invention is provided with the decorative sheet C and a key top main body 25 serving as a "core member".

As described above, in the decorative sheet C, a display layer 24 is provided with the soft feel layer 3 having the skin layer 1 and the foamed layer 2, the base material sheet 4, and the coating layer 6; the base material sheet 4 is stacked on the back surface 3a of the soft feel layer 3, and the coating layer 6 is stacked on the back surface 4b of the base material sheet 4. The decorative sheet C has a display hole 24a passing through the thickness of the soft feel layer 3 and the base material sheet 4 and in the form of a figure (which is the number "1" in the drawing). In the side surface of the outer edge of the decorative sheet C and the side surface of the display hole 24a, the side surface 1c of the skin layer 1, the side surface 2a of the foamed layer 2, and the side surface 4a of the base material sheet 4 are covered with the protective portion 7 formed by the coating layer 6. The coating layer 6 side of the decorative sheet C is fixed to the key top main body 25 described below by an adhesive (not shown).

The key top main body 25 is formed of thermoplastic resin, and is of the same rectangular configuration in plan view as the decorative sheet C. An outwardly protruding annular flange portion 25c is provided on an end portion on the back surface 25b side opposite to the operating surface 25a of the key top main body 25.

The key top main body 25 serving as the core member is formed of a hard resin such as a thermoplastic resin. For example, examples thereof include a polycarbonate resin, an acrylonitrile butadiene styrene resin, an acrylic resin, a polyester resin, and a polybutylene-terephthalate resin. In addition to the above, there are given alloy resins thereof.

A method of manufacturing the key top 26 will be described. First, stamping is performed on the decorative sheet to obtain the decorative sheet C provided with the display hole 24a. Next, the coating layer 6 side of the decorative sheet C is fixed to the operating surface 25a of the molded key top main body 25, thereby obtaining the key top 26.

The effect of the key top 26 will be described. In the key top 26, as in the cover member 9 of the first embodiment of the present invention and the casing 11 of the second embodiment of the present invention, the decorative sheet C is provided on the operating surface 25a of the key top main body 25, so it is possible to realize a key top 26 capable of maintaining a soft touch feeling.

While in the key top 26 of the third embodiment of the present invention shown the decorative sheet C is provided, it is also possible to provide, instead of the decorative sheet C, the decorative sheet A or the decorative sheet E. In this case also, as in the case of the above-described key top 26, it is possible to realize a key top 26 capable of maintaining a soft touch feeling.

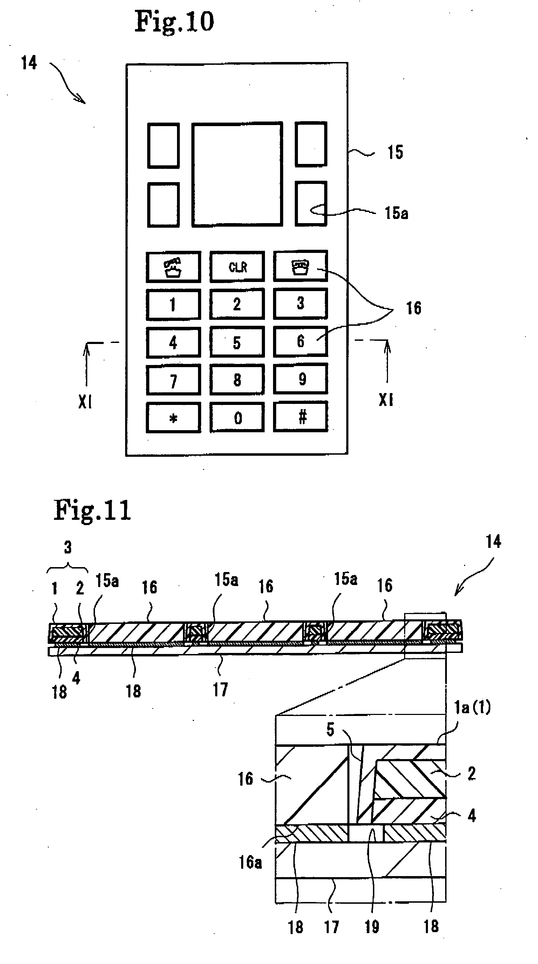

Embodiments of the decorative key sheet (FIGS. 10, 14, 16, 20, and 22): As embodiments of the decorative key sheet, decorative key sheets 14, 20, 23, 28, and 31 shown in FIGS. 10, 14, 16,20, and 22 will be described.

First Embodiment (FIGS. 10 and 11): FIGS. 10 and 11 show a decorative key sheet 14 according to the first embodiment of the present invention. FIG. 10 is a plan view of the decorative key sheet 14, and FIG 11 is a sectional view taken along the line XI-XI of FIG. 10. The decorative key sheet 14 of the first embodiment of the present invention is provided with a frame sheet 15, a key top 16, a base sheet 17, and print adhesive layers 18.

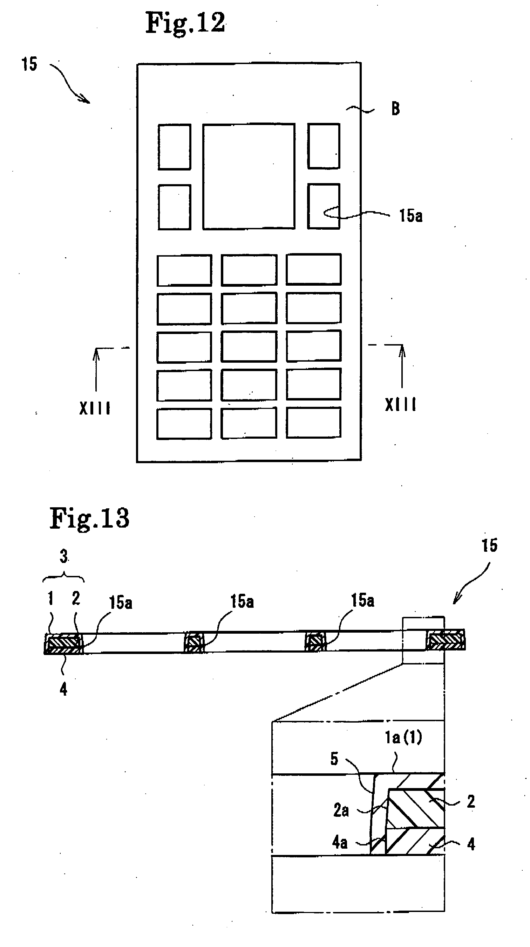

FIGS. 12 and 13 show the frame sheet 15. The frame sheet 15 consists of the above-described decorative key sheet B, and has a rectangular configuration in plan view. That is, the frame sheet 15 is provided with the soft feel layer 3 having the skin layer 1 and the foamed layer 2 and the base material sheet 4, and the base material sheet 4 is stacked on the back surface 3a of the soft feel layer 3. The frame sheet 15 has a plurality of through-holes 15a of a rectangular configuration in plan view passing through the thickness of the soft feel layer 3 and the base material sheet 4. Then, in the side surface of the outer edge of the frame sheet 15 and the side surfaces of the through-holes 15a, the side surface 2a of the inclined foamed layer 2 and the side surface 4a of the base material sheet 4 are covered with the protective portion 5 formed of the skin layer 1. Due to the demand for a reduction in thickness, the thickness of the frame sheet 15 preferably ranges from approximately 0.2 mm to 0.5 mm.

The key tops 16 are formed of a hard resin such as thermosetting resin or thermoplastic resin, and have a rectangular configuration in plan view. Then, they are arranged within the through holes 15a of the frame sheet 15. From the viewpoint of harmony with the height of the frame sheet 15, the thickness of the key tops 16 preferably ranges from approximately 0.2 mm to 0.6 mm.

The base sheet 17 consists of a resin film, and has a rectangular configuration similar to that of the frame sheet 15. The base sheet 17 serves as a base portion which maintains the configuration of the decorative key sheet 14 and on whose surface the frame sheet 15 and the key tops 16 are placed. When they are depressed, the key tops 16 are slightly distorted, and press contacts provided on a board (not shown) on the back surface side of the base sheet 17. It is also possible to provide pusher-like swellings at the portions of the back surface of the base sheet 17 pressing the contacts (not shown). Due to the demand for a reduction in thickness, the thickness of the base sheet 17 is preferably 150 µm or less, and more preferably, 50 µm or less.

The print adhesive layers 18 are adhesive layers for bonding together the frame sheet 15, the key tops 16, and the base sheet 17; they are formed by printing. The print adhesive layers 18 are formed of a material that is softened or melted through heating. As shown in FIG. 11, the print adhesive layers 18 which exist between the key tops 16 and the base sheet 17 are provided over the entire bottom surfaces 16a of the key tops 16, and are formed so as to be flush with the side surfaces 16b of the key tops 16. On the other hand, the print adhesive layers 18 provided between the frame sheet 15 and the base sheet 17 are not provided up to the edges of the frame sheet 15 adjacent to the key tops 16. Thus, no print adhesive layer 18 exists at the edges of the frame sheet 15 adjacent to the key tops 16, and there is generated a gap portion 19 where the frame sheet 15 and the base sheet 17 are not fixed to each other. Then, the gap portion 19 constitutes a non-constraint region where the base sheet 17 is not constrained by the frame sheet 15.

The material of the key tops 16 is a hard resin such as thermosetting resin or thermoplastic resin. As the thermosetting resin, for example, a urethan resin, an epoxy resin, or a silicone resin may be used, and as the thermoplastic resin, a polycarbonate resin, an acrylonitrile-styrene-acrylate resin, an acrylic resin, a polyester resin, or a polybutylene-terephthalate resin, and further alloy resins thereof may be used.

The material of the base sheet 17 is formed of a resin film, and, for example, there may be used are a polyethylene-terephthalate resin film, a polybutylene-terephthalate resin film, a polyurethane resin film, a polyamide resin film, a polypropylene resin film, a polystyrene resin film, a fluororesin film, an ionomer resin film, a polycarbonate resin film, a polyvinyl chloride resin film, or the like.

The material of the print adhesive layers 18 is one that is softened or melted through heating. Examples of the material include a resin of acrylic type, vinyl chloride type, polyester type, urethane type or the like, wax, and rubber. The ink for print formation is one which exhibits enough fluidity to allow printing at the time of coating and then maintains a solid state thereafter; it is possible to use a solvent-diluted type ink dissolved or dispersed in solvent, or an ink of the type which is obtained by fusing into liquid a substance that is solid at room temperature; from the viewpoint of accurate, fine printing on a predetermined bottom surface such as that of a key top 16, and due to the fact that the solvent is immediately evaporated after printing to leave a solid substance, thus maintaining the printed form, it is desirable to adopt a solvent-diluted type ink. Above all, from the viewpoint of suppressing sagging and deformation of the print adhesive layers 18 in the bonding step due to heating and pressurization, the type of ink which is softened by heating is more preferable than the type of ink which is melted by heating.

A method of manufacturing the decorative key sheet 14 will be described. First, stamping is performed on the decorative sheet B to obtain the frame sheet 15 provided with the through holes 15a. Further, the key tops 16 and the base sheet 17 are formed by molding. Next, characters, symbols, etc. are formed on the key tops 16, and then the print adhesive layers 18 are formed on the frame sheet 15 and the key tops 16 by screen printing, pad printing, relief printing, gravure printing or the like. After this, positioning is performed on the frame sheet 15 and the key tops 16 with respect to the base sheet 17, and predetermined regions are heated and pressurized from the base sheet 17 side by a thermocompression bonding machine or the like, whereby the base sheet 17, the frame sheet 15, and the key tops 16 are bonded together. In this way, the decorative key sheet 14 can be obtained. The heating and pressing conditions vary according to the material of the print adhesive layers 18, the thickness of the print adhesive layers 18, the thickness of the base sheet 17, etc.; the surface temperature of the pressed portion ranges from 120°C to 220°C, and more preferably, from 140°C to 170°C; the pressing time ranges from 1 second to 20 seconds, and more preferably, from 5 seconds to 10 seconds; the pressure is in the range of 30 kg to 500 kg / 20 to 25 cm², and more preferably, in the range of 50 kg to 300 kg / 20 to 25 cm².

The effects of the decorative key, sheet 14 will be described. In the decorative key sheet 14, the decorative sheet B is used as the frame sheet 15, so it is possible to provide a frame sheet 15 capable of maintaining a soft touch feeling, making it possible to realize a decorative key sheet 14 of high durability. Further, there are provided the base sheet 17 formed of a resin film, the key tops 16 arranged on the base sheet 17, and the print adhesive layers 18, so it is possible to realize a thin decorative key sheet 14. Then, thanks to the print adhesive layers 18, it is possible to accurately control the fixation positions for the key tops 16 and the base sheet 17, and the coating thickness, making it possible to provide a thin decorative key sheet 14 in which the key tops 16 are firmly attached so as not to be easily detached. In particular, due to the provision of the frame sheet 15 between the key tops 16, it is possible to realize a thin decorative key sheet 14 in which a nail tip is not easily allowed to enter the gaps between the key tops 16 and the base sheet 17 so that the key tops 16 are not easily detached.

While in the decorative key sheet 14 of the first embodiment of the present invention described above the decorative sheet B is provided, it is also possible to provide the decorative sheet A, the decorative sheet C, the decorative sheet D, or the decorative sheet E instead of the decorative sheet B. In this case also, it is possible to realize a decorative key sheet 14 capable of maintaining a soft touch feeling.

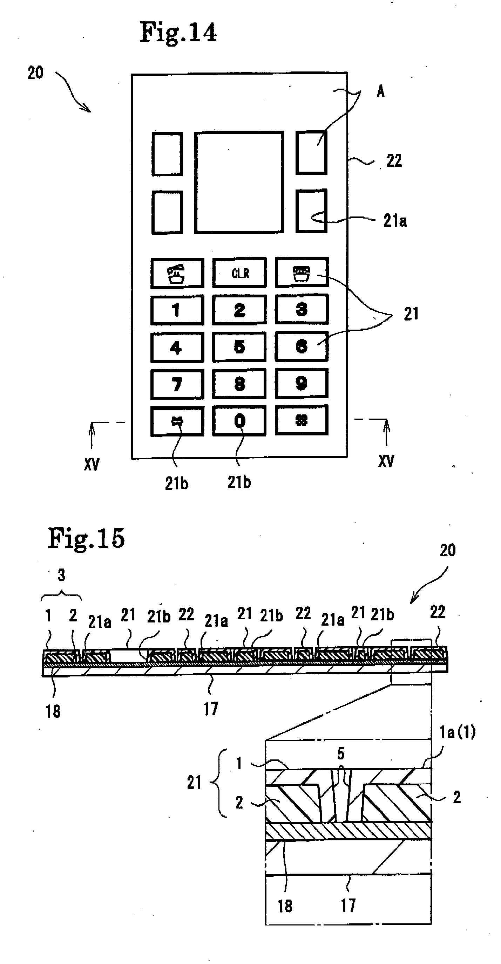

Second Embodiment (FIGS. 14 and 15): FIGS. 14 and 15 show a decorative key sheet 20 according to the second embodiment of the present invention. FIG 14 is a plan view of the decorative key sheet 20, and FIG. 15 is a sectional view taken along the line XV-XV of FIG. 14. The decorative key sheet 20 of the second embodiment of the present invention differs from the decorative key sheet 14 of the first embodiment of the present invention in the construction of key tops 21 and a frame sheet 22.

That is, in the decorative key sheet 20, not only the frame portion thereof but also the key tops portions are formed by the decorative sheet A. The key tops 21 are defined into a rectangular configuration in plan view by annular division holes 21 a, and each key top is provided with the soft feel layer 3 having the skin layer 1 and the foamed layer 2. The key tops 21 have display holes 21 b passing through the thickness of the soft feel layer 3 and representing figures, symbols, etc. Then, in the side surfaces of the division holes 21a of the key tops 21 and in the side surfaces of the display holes 21 b, the side surface 2a of the inclined foamed layer 2 is covered with the protective portion 5 formed of the skin layer 1. From the viewpoint of harmony with the height of the frame sheet 22, the thickness of the key tops 21 ranges approximately from 0.2 mm to 0.6 mm.

Like the key tops 21, the frame sheet 22 is provided with the soft feel layer 3 having the skin layer 1 and the foamed layer 2. In view of the demand for a reduction in thickness, the thickness of the frame sheet 22 preferably ranges approximately from 0.2 mm to 0.5 mm

The print adhesive layer 18 is provided on the entire surface of the base sheet 17

A method of manufacturing the decorative key sheet 20 will be described. First, the print adhesive layer 18 is provided on the base sheet 17 by printing, and the decorative sheet A is stacked on the print adhesive layer 18. Next, heating and pressing are effected from the base sheet 17 side by a thermocompression bonding machine or the like to thereby bond the decorative sheet A and the base sheet 17 to each other. After this, the decorative sheet A and the base sheet 17 are cut in accordance with the external dimensions of the decorative sheet 20, and then a cutter is passed from the decorative sheet A side to the print adhesive layer 18, thereby forming the division holes 21a and the display holes 21b. In this way, the decorative key sheet 20 can be obtained.

The effects of the decorative key sheet 20 will be described. In the decorative key sheet 20, the decorative sheet A is applied to the key tops 21 and the frame 22, so it is possible to provide key tops 21 and a frame sheet 22 that are capable of maintaining a soft touch feeling, making it possible to realize a decorative key sheet 20 of a novel design and high durability. Further, since the key tops 21 and the frame sheet 22 are formed by the division holes 21 a provided by applying a cutter to a single decorative sheet, the decorative key sheet 20 can be easily produced.

While in the decorative key sheet 20 of the second embodiment of the present invention described above the decorative sheet A is provided, it is also possible to provide the decorative sheet B, the decorative sheet C, the decorative sheet D, or the decorative sheet E instead of the decorative sheet A. In this case also, it is possible to realize a decorative key sheet 20 capable of maintaining a soft touch feeling.

Third Embodiment (FIGS. 16 and 17): FIGS. 16 and 17 show a decorative key sheet 23 according to the third embodiment of the present invention. FIG. 16 is an enlarged partial perspective view of the decorative key sheet 23, and FIG. 17 is a sectional view taken along the line XVII-XVII of FIG 16. The key sheet 23 of the third embodiment of the present invention is provided with key tops 26 each having a display layer 24 and a key top main body 25, and a base sheet 27.

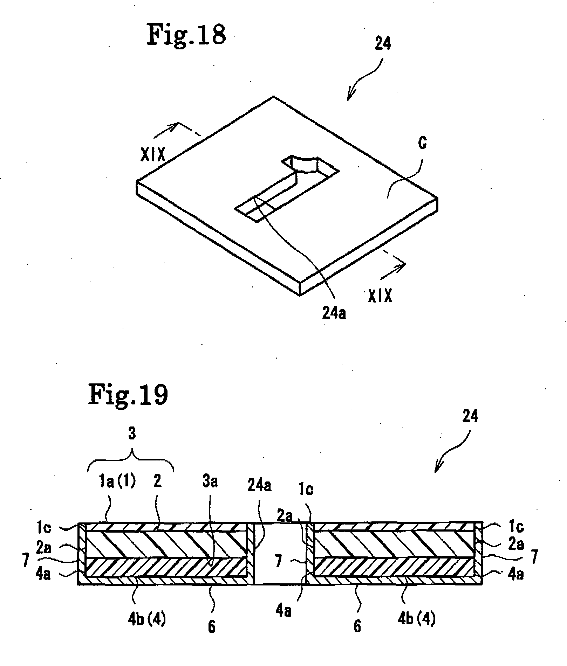

FIGS. 18 and 19 show the display layer 24. The display layer 24 consists of the above-described decorative sheet C, and is formed in a rectangular configuration in plan view. That is, the display layer 24 is provided with the soft feel layer 3 having the skin layer 1 and the foamed layer 2, the base material sheet 4, and the coating layer 6; the base material sheet 4 is stacked on the back surface 3a of the soft feel layer 3, and the coating layer 6 is stacked on the back surface 4b of the base material sheet 4. The display layer 24 has a display hole 24a passing through the thickness of the soft feel layer 3 and the base material sheet 4 and having a figure configuration (which is the number "1" in the drawing). In the side surface of the outer edge of the display layer 24 and in the side surface of the display hole 24a, the side surface 1c of the skin layer 1, the side surface 2a of the foamed layer 2, and the side surface 4a of the base material sheet 4 are covered with the protective portion 7 formed by the coating layer 6. The coating layer 6 side of the coating layer 6 is fixed to the operating surface 25a of the key top main body 25 described below by an adhesive (not shown) to form the key top 26.

The key top main body 25 is formed of thermoplastic resin and in the same rectangular configuration in plan view as the display layer 24. Then, an outwardly protruding annular flange portion 25c is provided on the end portion on the back surface 25b side opposite to the operating surface 25a. The back surface 25b side of the key top main body 25 is fixed to the base sheet 27 described below by an adhesive (not shown).

The base sheet 27 is formed of a rubber-like elastic material. On the operating surface side of the base sheet 28, there is formed a pedestal portion 27a as a swollen portion to which the key top 26 is fixed On the back surface on the side opposite to the operating surface, there is formed for each pedestal portion 27a a pusher portion 27b protruding in the depressing direction and adapted to press a contact provided on a board (not shown).

The key top main body 25 is formed of a hard resin such as a thermoplastic resin. Examples of the hard resin include polycarbonate resin, acrylonitrile butadiene styrene resin, acrylic resin, polyester resin, polybutylene terephthalate resin, and an alloy resin of these resins.

The base sheet 27 is formed of a rubber-like elastic material of high resiliency. For example, silicone rubber, acrylic rubber, ethylene-propylene rubber, natural rubber, isoprene rubber, butadiene rubber, styrene-based thermoplastic elastomer, olefine-based thermoplastic elastomer, ester-based thermoplastic elastomer, and urethane-based thermoplastic elastomer may be used.

A method of producing the decorative key sheet 23 will be described. First, stamping is performed on a decorative sheet to obtain the display layer 24 formed of the decorative sheet C provided with the display hole 24a. Next, the coating layer 6 side of the display layer 24 is fixed to the operating surface 25a of the key top main body 25 formed by molding, thereby obtaining the key top 26. Finally, the back surface 25b of the key top main body 25 is fixed to the pedestal portion 27a of the base sheet 27 formed by molding, thereby obtaining the decorative key sheet 23.

The effects of the decorative key sheet 23 will be described. In the decorative key sheet 23, the display layer 24 formed of the decorative sheet C is provided on the operating surface 25a of the key top main body 25, so it is possible to provide a key top 26 capable of maintaining a soft touch feeling, making it possible to realize a decorative key sheet 23 of high durability. Further, it is possible to impart a decoration of a different design to each key top 26, making it possible to realize a decorative key sheet 23 of a novel design.

While in the decorative key sheet 23 of the third embodiment of the present invention the decorative sheet C is provided, it is also possible to provide the decorative sheet A, the decorative sheet B, the decorative sheet D, or the decorative sheet E instead of the decorative sheet C. In this case also, it is possible to realize a decorative key sheet 23 capable of maintaining a soft touch feeling.

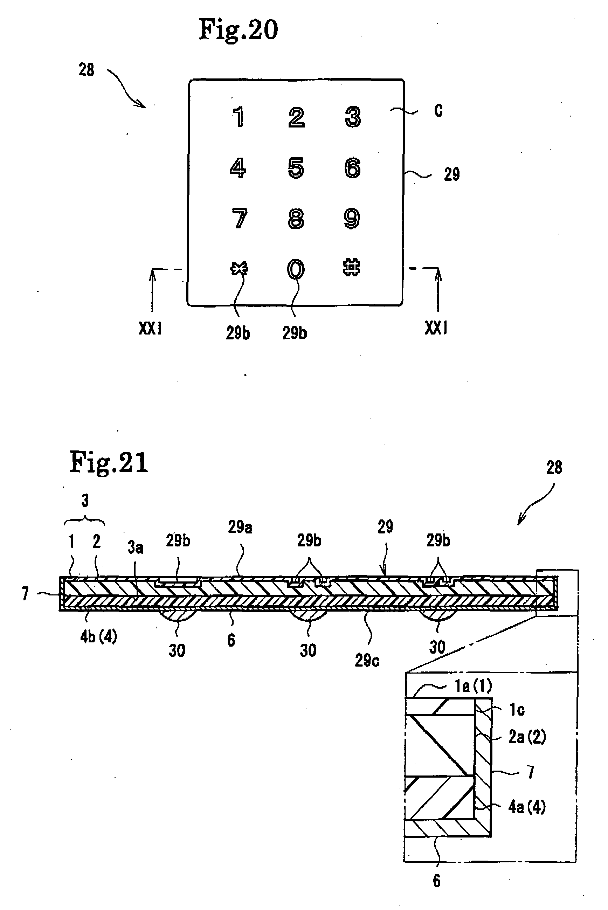

Fourth Embodiment (FIGS. 20 and 21): FIGS. 20 and 21 show a decorative key sheet 28 according to the fourth embodiment of the present invention. FIG. 20 is a plan view of an operation plate 29 formed of the decorative sheet C, and FIG 21 is a sectional view taken along the line XXI-XXI of FIG. 20. The decorative key sheet 28 of the fourth embodiment of the present invention is provided with the operation plate 29 and pushers 30.

The operation plate 29 consists of the above-described decorative sheet C, and is formed in a rectangular configuration in plan view. That is, the operation plate 29 is provided with the soft feel layer 3 having the skin layer 1 and the foamed layer 2, the base material sheet 4, and the coating layer 6; the base material sheet 4 is stacked on the back surface 3a of the soft feel layer 3, and the coating layer 6 is stacked on the back surface 4b of the base material sheet 4. Then, in the side surface of the outer edge of the operation plate 29, the side surface 1c of the skin layer 1, the side surface 2a of the foamed layer 2, and the side surface 4a of the base material sheet 4 are covered with the protective portion 7 formed by the coating layer 6. An operating surface 29a of the operation plate 29 has groove portions 29b having bottom surfaces representing figures, symbols, etc., and the inner surfaces of the groove portions 29b cover the foamed layer 2 with the protective portion 7 formed by the skin layer 1. In the operation plate 29, the peripheries of the groove portions 29b constitute the depressing operation portions.

The pushers 30 are formed of resin in a semi-spherical configuration. They are provided on the back surface 29c on the side opposite to the operating surface 29a of the operation plate 29, and protrude from the back surface 29c in a dome-like fashion in the depressing direction.

As the material of the pushers 30, it is possible to use a hard resin such as reaction setting type resin or thermoplastic resin. For example, it is desirable to adopt a photo reaction setting type liquid resin, such as an acrylic resin, an epoxy resin, or a urethane resin By using such a resin, it is possible to easily form the pushers 30 through dripping or transfer to the back surface 29c of the operation plate 29.

A method of manufacturing the decorative key sheet 28 will be described. First, stamping is performed on a decorative sheet to obtain the operation plate 29 formed of the decorative sheet C. Next, a heated jig or stamp is pressed against the operating surface 29a of the operation plate 29 to form the bottomed groove portions 29b representing figures, symbols, etc. At this time, the foamed layer 2 is compressed, and, in the inner surfaces of the groove portions 29b, the foamed layer 2 is covered with the skin layer 1 as the protective portion 7. Finally, the pushers 30 are formed on the back surface 29c of the operation plate 29 by using a liquid resin, thereby obtaining the decorative key sheet 28.

The effects of the decorative key sheet 28 will be described. In the decorative key sheet 28, the decorative sheet C is used as the operation plate 29, so it is possible to provide an operating surface 29a capable of maintaining a soft touch feeling, making it possible to realize a decorative key sheet 28 of high durability. Further, the pushers 30 protruding from the back surface 29c of the operation plate 29 can appropriately press contacts (not shown), thus making it possible to realize a decorative key sheet 28 allowing reliable depressing operation

While in the decorative key sheet 28 of the fourth embodiment of the present invention the decorative sheet C is provided, it is also possible to provide the decorative sheet A, the decorative sheet B, the decorative sheet D, or the decorative sheet E instead of the decorative sheet C. In this case also, it is possible to realize a decorative key sheet 28 capable of maintaining a soft touch feeling.

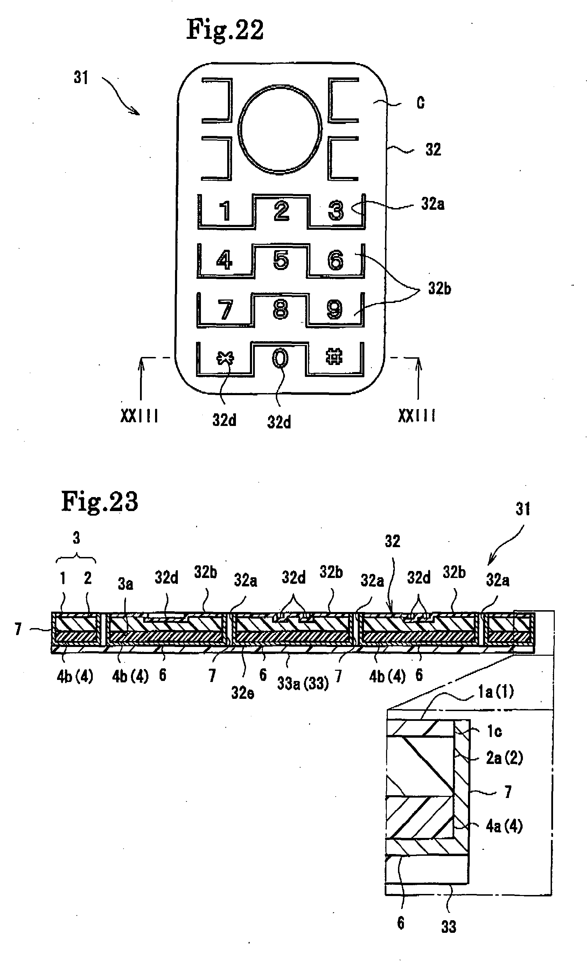

Fifth Embodiment (FIGS. 22 and 23): FIGS. 22 and 23 show a decorative key sheet 31 according to the fifth embodiment of the present invention. FIG. 22 is a plan view of the decorative key sheet 31, and FIG 23 is a sectional view taken along the line XXIII-XXIII of FIG. 22. The decorative key sheet 31 of the fifth embodiment of the present invention is provided with an operation plate 32 operated by a finger or the like, and a base sheet 33 situated on the bottom surface side of the operation plate 32.

The operation plate 32 is formed as a "frame sheet" formed of the above-described decorative sheet C in a substantially rectangular configuration in plan view. That is, the operation plate 32 is provided with the soft feel layer 3 having the skin layer 1 and the foamed layer 2, the base material sheet 4, and the coating layer 6; the base material sheet 4 is stacked on the back surface 3a of the soft feel layer 3, and the coating layer 6 is stacked on the back surface 4b of the base material sheet 4. In the operation plate 32, there are provided division holes 32a passing through the thickness of the soft feel layer 3 and the base material sheet 4, and tongue-shaped depressing operation members 32a are defined by the division holes 32a. Further, bottomed groove portions 32d as "key displays" representing figures, symbols, etc: are formed in the operating surfaces (front surfaces) 32c of the depressing operation members 32b, and, in the inner surfaces of the groove portions 32d, the foamed layer 2 is covered with the protective portion 7 formed by the skin layer 1. As shown in FIG. 22, which shows the configuration of the division holes 32a, the depressing operation members 32b representing figures and symbol "*" are formed as rectangular-wave-shaped members defined three ways, and the upper, central depressing operation member 32b is formed in an annular configuration Then, in the side surface of the outer edge of the operation plate 32, the side surface 1c of the skin layer 1, the side surface 2a of the foamed layer 2, and the side surface 4a of the base material sheet 4 are covered with the protective portion 7 formed by the coating layer 6. The back surface 32e of the operation plate 32 is fixed to the front surface of the following base sheet 33 by an adhesive (not shown)

The base sheet 33 consists of a resin film, and is formed in the same outer configuration as the operation plate 32. Then, it closes the division holes 32a of the operation plate 32.

The base sheet 33 is preferably formed of a flexible resin film; examples of the resin film that can be used include a polyethylene terephthalate resin film, polyethylene naphthalate resin film, polybutylene terephthalate resin film, polycarbonate resin film, acrylic resin film, and urethane resin film.

A method of manufacturing the decorative key sheet 31 will be described. First, stamping is performed on a decorative sheet to provide the division holes 32a, thus obtaining the operation plate 32 formed of the decorative sheet C. Next, a heated jig or stamp is pressed against the operating surface 32c of the operation plate 32 to form the bottomed groove portions 32d representing figures, symbols, etc. At this time, the foamed layer 2 is compressed, and, in the inner surfaces of the groove portions 32d, the foamed layer 2 is covered with the skin layer 1 as the protective portion 7. Finally, the base sheet 33 is fixed to the back surface 32e of the operation plate 32, thereby obtaining the decorative key sheet 31.

The effects of the decorative key sheet 31 will be described. In the decorative key sheet 31, the decorative sheet C is used as the operation plate 32, so it is possible to provide an operating surface 32c capable of maintaining a soft touch feeling, making it possible to realize a decorative key sheet 31 of high durability. Further, it is possible to realize a thin decorative key sheet 31 through formation by the operation plate 32 and the base sheet 33. Further, since the base sheet 33 is integrally fixed, it is possible to provide depressing operation members 32b defined by annular division holes 32a, making it possible to realize a decorative key sheet 31 of a novel design. Further, in this case, the depression load on the depressing operation members 32b situated within the division holes 32a is smaller than the depression load bending the operation plate 32, so, as compared with the other depressing operation members 32b surrounded three ways by the division holes 32a, it is possible to achieve a reduction in depression load.

While in the decorative key sheet 31 of the fifth embodiment of the present invention the decorative sheet C is provided, it is also possible to provide the decorative sheet A, the decorative sheet B, the decorative sheet D, or the decorative sheet E instead of the decorative sheet C" In this case also, it is possible to realize a decorative key sheet 31 capable of maintaining a soft touch feeling.

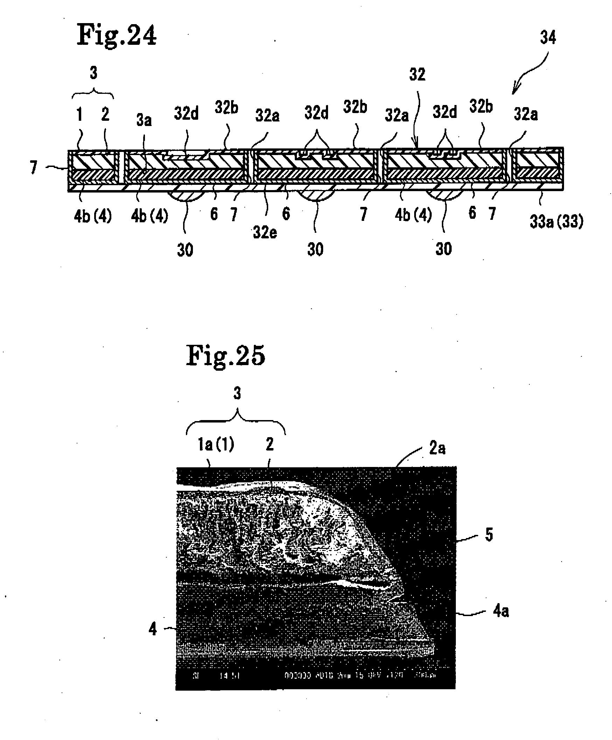

Modification of the Fifth Embodiment (FIG. 24): As shown in FIG 24, as a modification of the decorative key sheet 31, it is possible to provide a decorative key sheet 34 in which, on the back surface 33a of the base sheet 33, there is provided for each depressing operation member 32b a pusher 30 protruding from the back surface 33a in a dome-like fashion in the depressing direction. In this construction, the pushers 30 can appropriately press contacts (not shown), making it possible to realize a decorative key sheet 34 allowing reliable depressing operation.

While in all of the above-described embodiments the base material sheet 4 is provided, in a case in which, for example, the decorative sheet is applied where it need not have a fixed form, it is possible to omit the base material sheet 4. Further, it is naturally also possible to use any one of the above-mentioned decorative sheets A through E instead of the decorative molded bodes 9 and 11 and the decorative sheets used in the decorative key sheets 14, 20, 23, 28, 31, and 34 of the embodiments described above.

### EXAMPLE

Next, the present invention will be described in more detail with reference to an example and a comparative example; the following example, however, should not be construed restrictively. In the following, the above-mentioned decorative sheet B will be described as a typical example.

1. Production of the decorative sheet

Example 1: A urethane film as the skin layer (1) having a thickness of 40 µm and a urethane foam as the foamed layer (2) having a thickness of 400 µm were laminated together to thereby obtain the soft feel layer (3). Further, a polycarbonate(PC)/polybutylene-terephthalate (PBT) film as the base material sheet (4) having a thickness of 250 µm was provided on the foamed layer (2) side of the soft feel layer (3) through lamination, thereby producing a decorative sheet. Next, this decorative sheet was cut by a cutter to produce a decorative sheet of specimen 1 of the configuration as shown in FIG. 12 having through-holes. In the cutting process, the cutter is previously heated, and cutting is slowly performed from the skin layer (1) side such that the cut surface is oblique. Here, the cutter was obliquely applied to the decorative sheet, and cutting was performed slowly. By this method, the skin layer (1) forms the protective portion (5) covering the side surface (2a) of the foamed layer (2). FIG. 25 is a scanning electron microscope photograph showing a section of the decorative sheet of specimen 1 It was confirmed that, at the edge portion of the decorative sheet, the protective portion (5) formed of the skin layer (1) covered the side surface (2a) of the foamed layer (2).

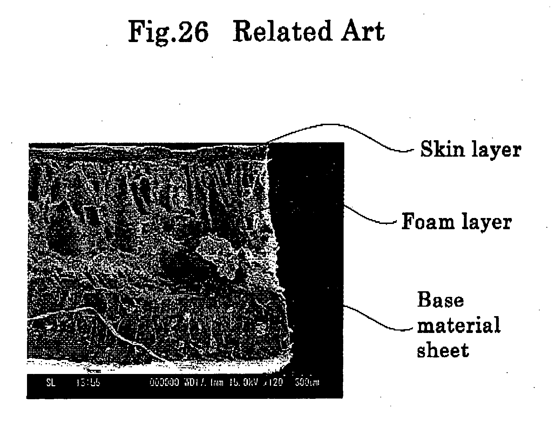

Comparative Example 1: After producing a decorative sheet similar to that of Example 1, cutting was performed with an unheated cutter such that the cut surface was perpendicular to the thickness direction, thereby producing a decorative sheet of specimen 2. FIG. 26 is a scanning electron microscope photograph showing a section of the decorative sheet of specimen 2. It was confirmed that, at the edge portion of the decorative sheet, the side surface (2a) of the foamed layer (2) was exposed.

2. Evaluation of the Decorative Sheets

The decorative sheets were measured as follows for wear resistance and alcohol resistance and were evaluated. Table 1 shows the measurement results.

"Wear resistance"; by using a sand eraser (RADIC 500B manufactured by Kabushiki Kaisha Sakura Crayon Pastel), the surface of the decorative sheet was rubbed so as to pass the opening ends of the through-holes under the conditions of a load of 500 g, a movement stroke of 25 mm, and a reciprocating speed of 60/min. Then, the number of times that the eraser was reciprocated until the foamed layer (2) was exposed was measured. Table 1 shows the measurement values.

"Alcohol resistance", by using absorbent cotton impregnated with disinfectant alcohol (81.4% ethanol), the decorative sheet was rubbed in the same manner as in the wear resistance test under the conditions of a load of 1000 g, a movement stroke of 25 mm, and a reciprocating speed of 60/min. Then, the number of times that the cotton was reciprocated until the decorative sheet suffers damage was measured. Table 1 shows the measurement results.

As shown in Table 1, in the wear resistance evaluation, in specimen 1, the foamed layer (2) was not exposed even when the sand eraser had been reciprocated more than 1000 times, which indicates superior wear resistance. In contrast, in specimen 2, the foamed layer (2) was exposed when the sand eraser had been reciprocated 600 times. In the alcohol resistance evaluation, specimen 1 did not suffer damage until the cotton was reciprocated 50 times, whereas specimen 2 suffered damage when the cotton had been reciprocated five times. From the above results, it was seen that specimen 1 was a decorative sheet of high durability,

**Table 1**

| | Specimen 1 | Specimen 2 |
|---|---|---|
| Wear resistance (number times) | 1,000 or more | 600 |
| Alcohol resistance (number of times) | 50 | 5 |

## Claims

1. A decorative sheet (A, B, C, D, E) comprising a soft feel layer (3) including a skin layer (1) and a foamed layer (2) stacked on a back surface (1b) of the skin layer (1) on a side opposite to an external surface (1a) of the skin layer (1),
wherein a side surface (2a) at an edge portion of the foamed layer(2) is provided with a protective portion (5, 7) covering the side surface (2a)

2. A decorative sheet (A, B, D) according to Claim 1, wherein the protective portion (5) is formed by extending the skin layer (1) up to the side surface (2a) at the edge portion of the foamed layer (2).

3. A decorative sheet (A, B, D) according to Claim 1, wherein the protective portion (5) is formed by drawing the skin layer (1) through heating and pressurization in a direction crossing the soft feel layer (3).

4. A decorative sheet (C, E) according to Claim 1, wherein the protective portion (7) is a coating layer (6) formed on the side surface (2a) at the edge portion of the foamed layer (2).

5. A decorative sheet (A, B, D) according to any one of Claims 1 thorough 4, further comprising a through-hole (13) passing through a thickness of the soft feel layer (3), wherein the protective portion (5) is provided on the side surface (2a) of the foamed layer (2) in the through-hole (13).

6. A decorative sheet (A, B, D) according to any one of Claims 1 through 5, wherein the external surface (1a) of the skin layer (1) of the soft feel layer (3) has a bottomed groove portion (1d) formed in the external surface (1a), and wherein the protective portion (5) is formed on the side surface (2a) of the foamed layer (2) in the groove portion (1d)

7. A decorative sheet (D) according to any one of Claims 1 through 6, wherein the soft feel layer (3) has a shield layer (8) provided on a back surface (3a) of the soft feel layer, for interfering conductance of heat and pressure to the soft feel layer (3).

8. A decorative molded body (9, 11, 26), comprising the decorative sheet (A, B, C, D, E) according to any one of Claims 1 through 7, which is formed on a surface of a core member (10, 12, 25) formed of a molded body,

9. A decorative key sheet (14, 20) comprising:
a base sheet (17) formed of a resin film;
a key top (16, 21) arranged on the base sheet (17); and
a frame sheet (15) arranged on the base sheet (17) side by side with the key top (16),
wherein the frame sheet (15) comprises the decorative sheet (A, B, C, D, E) according to any one of Claims 1 through 7

10. A decorative key sheet (31, 34) comprising:
a base sheet (33) formed of a resin film; and
a frame sheet (32) provided on the base sheet (33), with a key display (32d) being provided on a surface (32c) of the frame sheet (32),
wherein the frame sheet (32) comprises the decorative sheet (A, B, C, D, E) according to any one of Claims 1 through 7.

11. A decorative key sheet (23) comprising: a base sheet (27) formed of a rubber-like elastic material; and a key top (26) having a key top main body (25) arranged on the base sheet (27) and having a decorated operating surface (25a),
wherein the key top (26) has a decorative sheet (A, B, C, D, E) according to any one of Claims 1 through 7.

12. A method of manufacturing a decorative sheet (A, B, D) comprising a soft feel layer (3) including a skin layer (1) and a foamed layer (2) stacked on a back surface (1b) of the skin layer (1) on a side opposite to an external surface (1a) of the skin layer (1), the method comprising:
forming an edge portion on the foamed layer (2) by a heating/pressing means applied from the skin layer (1) side of the soft feel layer (3), and
forming a protective portion (5) for covering a side surface (2a) of the edge portion with the skin layer (1) formed by softening and expanding.

13. A method of manufacturing a decorative sheet (A, B, D) according to Claim 12, wherein the heating/pressing means comprises a cutter blade.
